# EUROPEAN PATENT SPECIFICATION

(11) **EP 4 074 782 B1**
(45) Date of publication and mention of the grant of the patent: **20.03.2024**
(21) Application number: 22168016.8
(22) Date of filing: 12.04.2022
(51) Int. Cl.: C09D 5/00

(54) **METHOD OF APPLYING A SOLVENT-BORNE COATING COMPOSITION TO A SUBSTRATE UTILIZING A HIGH TRANSFER EFFICIENCY APPLICATOR TO FORM A COATING LAYER THEREON**
VERFAHREN ZUM AUFBRINGEN EINER LÖSUNGSMITTELHALTIGEN BESCHICHTUNGSZUSAMMENSETZUNG AUF EIN SUBSTRAT UNTER VERWENDUNG EINES APPLIKATORS MIT HOHER ÜBERTRAGUNGSEFFIZIENZ ZUR BILDUNG EINER BESCHICHTUNGSSCHICHT
PROCÉDÉ D'APPLICATION D'UNE COMPOSITION DE REVÊTEMENT À BASE DE SOLVANT SUR UN SUBSTRAT À L'AIDE D'UN APPLICATEUR À HAUT RENDEMENT DE TRANSFERT POUR Y FORMER UNE COUCHE DE REVÊTEMENT

(30) Priority: 12.04.2021 US 202163173744 P
(43) Date of publication of application: 19.10.2022
(73) Proprietor: Axalta Coating Systems GmbH, 4057 Basel (CH)
(72) Inventor: S. Wolfe, Michael, Philadelphia, 19103 (US); Stevens, Cameron, Philadelphia, 19103 (US); Neal, James, Philadelphia, 19103 (US); Stoffel, Petra, Philadelphia, 19103 (US); Baltrusch, Matthias, Philadelphia, 19103 (US)
(74) Representative: LKGlobal UK Ltd.

(56) References cited:
- WO-A1-2007/000335

## Description

### TECHNICAL FIELD

The present disclosure generally relates to a method of applying solvent-borne coating composition to a substrate utilizing a high transfer efficiency applicator to form a coating layer thereon. More specifically, this disclosure relates to use of a particular polyurea crystal sag control agent which minimizes sag of the composition while still allowing the composition to be applied via the high transfer efficiency applicator and to cure with excellent physical and aesthetic properties.

### BACKGROUND

Ink jet printing is a non-impact printing process in which droplets of ink are deposited on a substrate, typically paper or textile fabrics, in response to an electronic signal. This application process has the advantage of allowing digital printing of the substrate which can be tailored to individual requirements. The drops can be jetted onto the substrate by a variety of inkjet application methods including continuous and drop-on-demand printing. In drop-on-demand printing, the energy to eject a drop of ink can be from a thermal resistor, a piezoelectric crystal, acoustic or a solenoid valve. These methods use high transfer efficiency applicators.

In the automotive industry, a vehicle body is typically covered with a series of finishes including an electrocoat, a primer, a colored basecoat providing the color and a clear topcoat to provide addition protection and a glossy finish. Currently most automobile bodies are painted in a single color with the basecoat being applied in a single spray operation. The coating is applied with pneumatic spray or rotary equipment producing a broad jet of paint droplets with a wide droplet size distribution. This has the advantage of producing a uniform high-quality coating in a relatively short time by an automated process.

However, this process has a number of disadvantages. If the vehicle body is to be painted with multiple colors, for example if a second color is used for a pattern such as a stripe, or if a whole section of the vehicle body such as the roof is painted a different color, this requires masking the first coating and then passing the vehicle body through the paint spray process a second time to add the second color. After this second paint operation the masking must be removed. This is both time-consuming and labor-intensive adding significant cost to the operation.

A second disadvantage of the current spraying technology is that the drops of paint are sprayed in a wide jet of droplets which has a wide range of droplet sizes. As a result many of the droplets do not land on the vehicle, either because they are sprayed near the edges and so overspray the substrate, or because the smaller droplets have too low a momentum to reach the vehicle body. This excess overspray must be removed from the spray operation and disposed of safely leading to significant waste and also additional cost.

Applying coatings using a high transfer efficiency applicator may provide a solution for applying two colors to a vehicle and for minimizing overspray by generating drops of a uniform size that can be directed to a specific point on the substrate, e.g. a specific location the vehicle body, thus minimizing, or completely eliminating oversprayed droplets. In addition, digital printing can be used to print patterns or two tones on a vehicle body, either as a second color digitally printed on the top of a previously sprayed basecoat of a different color, or directly onto the primed or clearcoated vehicle substrate.

However, conventional inkjet inks have typically been formulated to print on porous substrates such as paper and textiles where the ink is rapidly absorbed into the substrate thus facilitating drying and handling of the substrate shortly after printing. In addition, although the printed articles have sufficient durability for these applications, such as printed text and pictures, or patterned fabrics, the durability requirements of an automotive coating are far greater in terms of both physical durability, such as resistance to abrasion and chipping, and long-term durability to weathering and light resistance. Furthermore, ink jet inks known in the art are formulated to have a low and generally shear-rate independent, or Newtonian, viscosity, typically below 20 cps. This is because of the limited amount of energy available in each nozzle of a printhead to eject a drop and also to avoid thickening of the ink in the channels of the printhead potentially leading to clogging.

By contrast, an automotive coating typically has significant non-Newtonian shear behavior with extremely high viscosity at low-shear to help avoid pigment settling and to ensure rapid and even set-up of the coating immediately after application, but relatively low viscosity at high shear rates to facilitate spraying and atomization of the spray into droplets.

Moreover, even if incumbent technology is suitable for use in some horizontal surface applications, other applications remain, such a vertical surface applications, wherein the incumbent technology sags to unacceptable levels. Since high transfer efficiency applicators demand very low viscosity without any shear thinning behavior, standard approaches for imparting sag resistance for spray applied coatings cannot be employed.

More specifically, limitations imposed by zero overspray applicators (continuous streams) or high resolution drop on demand (i.e. "inkjet" printheads) typically require that high shear viscosity be very low. In contrast with spray atomization, because evaporation of solvent does not occur after ejection of the paint from the applicator and prior to impacting the substrate, viscosity buildup does not occur. Consequently, coatings will sag on non-horizontal surfaces. To achieve adequate sag resistance, rheology modifiers must be incorporated at such a high level that, while sag can be prevented, a yield stress prevents flow and leveling resulting in coating defects that are unique to zero overspray applicators. These defects include nozzle line and stripe overlap visibility. The former is due incomplete flow and leveling of streams or droplets emitted from adjacent nozzles resulting in visible and parallel lines in the direction of printhead movement. The latter is a result of application of a second stripe of paint (having width of the nozzle array) adjacent to a previously applied first stripe. While changing the index (distance between adjacent stripes) can improve the coalescence, with the high levels of rheology modifier required to prevent sag, the overlap region exhibits a visible peak or valley that cannot be eliminated by index optimization. In addition, due to particle size limitations for these small nozzle applicators, some rheology control agents cannot be used due to filter and nozzle clogging. Accordingly, there remains opportunity for improvement.
WO 2007/000335 A1 describes a thixotropic agent comprising a first polyurea reaction product of a first polyisocyanate with a first amine and a second polyurea reaction product of a second polyisocyanate with a second amine different from the first polyurea reaction product precipitated in the presence of the colloidal particles of the first reaction product.

### BRIEF SUMMARY

This disclosure provides a method of applying a one-component solvent-borne coating composition to a substrate utilizing a high transfer efficiency applicator to form a coating layer disposed on the substrate, the method comprising the steps of:
providing the coating composition to the high transfer efficiency applicator; and
applying the coating composition to the substrate through the high transfer efficiency applicator to form the coating layer on the substrate wherein a loss of volatiles after application through the high transfer efficiency applicator is less than about 0.5 weight percent based on a total weight of the coating composition,
wherein the coating composition comprises:
   A. a resin comprising an acrylic, a polyester, or combinations thereof;
   B. a melamine cross-linker;
   C. an optional pigment;
   D. an organic solvent; and
   E. at least one polyurea crystal sag control agent that is the reaction product of an amine and an isocyanate, that has a melting point of from about 50°C to about 150°C, and that is present in an amount of from about 0.1 to about 4 weight percent based on a total weight of the coating composition; and
   wherein the coating composition has a wet film thickness of at least about 30 microns measured at about 45 degrees without visible sag.

This disclosure also provides a method of applying a two-component solvent-borne coating composition to a substrate utilizing a high transfer efficiency applicator to form a coating layer disposed on the substrate, the method comprising the steps of:
providing the coating composition to the high transfer efficiency applicator; and
applying the coating composition to the substrate through the high transfer efficiency applicator to form the coating layer on the substrate wherein a loss of volatiles after application through the high transfer efficiency applicator is less than about 0.5 weight percent based on a total weight of the coating composition,
wherein the coating composition comprises:
   A. a hydroxyl-functional resin;
   B. an isocyanate cross-linker;
   C. an optional pigment;
   D. an organic solvent; and
   E. at least one polyurea crystal sag control agent that is the reaction product of an amine and an isocyanate, that has a melting point of from about 50°C to about 150°C, and that is present in an amount of from about 0.1 to about 4 weight percent based on a total weight of the coating composition; and
wherein the coating composition has a wet film thickness of at least about 30 microns measured at about 45 degrees without visible sag.

### BRIEF DESCRIPTION OF THE DRAWINGS

The present disclosure will hereinafter be described in conjunction with the following drawing figures, wherein like numerals denote like elements and:
FIG. 1A is a top-view of a high transfer efficiency applicator applying a coating composition to a substrate;
FIG. 1B is a side view of FIG. 1A;
FIG. 2A is a side view of a substrate with a paint (coating composition) disposed thereon showing a position of an edge nozzle of a high transfer efficiency applicator;
FIG. 2B is a side view of the substrate of FIG. 2A that is tilted during a process of determining sag wherein an angle of the substrate as compared to a horizontal surface is indicated;
FIG. 3A is a side view of a high transfer efficiency applicator including a plurality of nozzles applying a coating composition to a substrate wherein single nozzle lines can be defined as having a periodically repeating pattern that has spacing consistent with the spacing between nozzles on the nozzle plate;
FIG. 3B is a side view of FIG. 3A showing stripes of the coating composition applied to a substrate wherein each stripe is a single pass of about 50 nozzles;
FIG. 3C is a magnified view of a single pass of FIG. 3A wherein a defect is present where each nozzle impacted the substrate;
FIG. 4A shows phase stepped deflectometry measurements of various coating compositions of this disclosure;
FIG. 4B is a photograph showing sag of Example 10;
FIG. 4C is a photograph showing sag of Example 11;
FIG. 5 is a photograph showing sag of a comparative composition with no rheology control agent is incorporated therein leading to very poor sag resistance;
FIG. 6 is a photograph of a substrate with a comparative composition disposed thereon showing visible nozzle line defect; and
FIG. 7 is a photograph of a substrate with a comparative composition disposed thereon showing stripe overlap defect.

### DETAILED DESCRIPTION

The following detailed description is merely exemplary in nature and is not intended to limit the instant disclosure. Furthermore, there is no intention to be bound by any theory presented in the preceding background or the following detailed description.

Embodiments of the present disclosure are generally directed to one- and two- component solvent borne coating compositions and methods for forming the same. For the sake of brevity, conventional techniques related to formation of such compositions may not be described in detail herein. Moreover, the various tasks and process steps described herein may be incorporated into a more comprehensive procedure or process having additional steps or functionality not described in detail herein. In particular, various steps in the manufacture of such compositions are well-known and so, in the interest of brevity, many conventional steps will only be mentioned briefly herein or will be omitted entirely without providing the well-known process details.

This disclosure provides a method of applying a one-component solvent-borne coating composition to a substrate utilizing a high transfer efficiency applicator to form a coating layer disposed on the substrate, the method comprising the steps of:
providing the coating composition to the high transfer efficiency applicator; and
applying the coating composition to the substrate through the high transfer efficiency applicator to form the coating layer on the substrate wherein a loss of volatiles after application through the high transfer efficiency applicator is less than about 0.5 weight percent based on a total weight of the coating composition,
wherein the coating composition comprises:
   A. a resin comprising an acrylic, a polyester, or combinations thereof;
   B. a melamine cross-linker;
   C. an optional pigment;
   D. an organic solvent; and
   E. at least one polyurea crystal sag control agent that is the reaction product of an amine and an isocyanate, that has a melting point of from about 50°C to about 150°C, and that is present in an amount of from about 0.1 to about 4 weight percent based on a total weight of the coating composition; and
wherein the coating composition has a wet film thickness of at least about 30 microns measured at about 45 degrees without visible sag. In various non-limiting embodiments, all values and ranges of values, both whole and fractional, including and between the aforementioned values, are hereby expressly contemplated for use herein.

This disclosure also provides a method of applying a two-component solvent-borne coating composition to a substrate utilizing a high transfer efficiency applicator to form a coating layer disposed on the substrate, the method comprising the steps of:
providing the coating composition to the high transfer efficiency applicator; and
applying the coating composition to the substrate through the high transfer efficiency applicator to form the coating layer on the substrate wherein a loss of volatiles after application through the high transfer efficiency applicator is less than about 0.5 weight percent based on a total weight of the coating composition,
wherein the coating composition comprises:
   A. a hydroxyl-functional resin;
   B. an isocyanate cross-linker;
   C. an optional pigment;
   D. an organic solvent; and
   E. at least one polyurea crystal sag control agent that is the reaction product of an amine and an isocyanate, that has a melting point of from about 50°C to about 150°C, and that is present in an amount of from about 0.1 to about 4 weight percent based on a total weight of the coating composition; and
wherein the coating composition has a wet film thickness of at least about 30 microns measured at about 45 degrees without visible sag. In various non-limiting embodiments, all values and ranges of values, both whole and fractional, including and between the aforementioned values, are hereby expressly contemplated for use herein.

Throughout this disclosure, the terminology "consisting essentially of" or "consist essentially of" may describe embodiments that are free of any alternative monomers, polymers, additives, reactants, fillers, solvents, etc., as determined by one of skill in the art. The terminology "free of" may be described as including less than 10, 9, 8, 7, 6, 5, 4, 3, 2, 1, 0.5, or 0.1, weight percent of the element at issue based on a total weight of the composition. In various non-limiting embodiments, all values and ranges of values, both whole and fractional, including and between the aforementioned values, are hereby expressly contemplated for use herein.

This disclosure includes the step of applying the coating composition to the substrate. The step of applying is not particularly limited. In various embodiments, the step of applying is further defined as jetting, e.g. jetting through the high transfer efficiency applicator. Alternatively, the step of applying may be further defined as printing. This step is described in greater detail below.

Moreover, the coating composition is not particularly limited and may be any known in the art that includes the components described herein. For example, this composition may be described as a one-component or "1K" composition that does not require a hardener, catalyst or activator to cure. For example, this composition may cure via exposure to air. Alternatively, this composition may be described as a two-component or "2K" composition.

The coating composition may be utilized to coat any type of substrate known in the art. In embodiments, the substrate is a vehicle, automobile, or automobile vehicle. A "vehicle" or "automobile" or "automobile vehicle" includes an automobile, such as, car, van, mini van, bus, SUV (sports utility vehicle); truck; semi truck; tractor; motorcycle; trailer; ATV (all terrain vehicle); pickup truck; heavy duty mover, such as, bulldozer, mobile crane and earth mover; airplanes; boats; ships; and other modes of transport. The coating composition may also be utilized to coat substrates in industrial applications such as buildings; fences; ceramic tiles; stationary structures; bridges; pipes; cellulosic materials (e.g., woods, paper, fiber, etc.). The coating composition may also be utilized to coat substrates in consumer products applications such as helmets; baseball bats; bicycles; and toys. It is to be appreciated that the term "substrate" as utilized herein can also refer to a coating layer disposed on an article that is also considered a substrate.

Various substrates may include two or more discrete portions of different materials. For example, vehicles can include metal-containing body portions and plastic-containing trim portions. Due to the bake temperature limitations of plastics (80°C) relative to metals (140°C), the metal-containing body portions and the plastic-containing trim portions may be conventionally coated in separate facilities thereby increasing the likelihood for mismatched coated parts. A coating composition suitable for plastic substrates may be applied to the plastic substrates by the high transfer efficiency applicator after application and bake of the coating composition suitable for metal substrates without the need for masking the substrate and wasting a portion of the coating composition through low-transfer efficiency application methods, such as conventional spray atomization. The coating composition suitable for plastic substrates may be applied using a first high transfer efficiency applicator and the coating composition suitable for metal substrates may be applied using a second high transfer efficiency applicator. The first high transfer efficiency applicator and the second high transfer efficiency applicator may form a high transfer efficiency applicator assembly.

The method includes the step of providing the coating composition to the high transfer efficiency applicator. The step of providing is not particularly limited and may be any known in the art. For example, the step of providing may be describe as providing one or more components of the composition, in whole or in part, combining these components to form the composition, and then providing the completed composition. Alternatively, the step of providing may be describe as pumping, flowing, moving, or otherwise delivering one or more components of the composition or the composition as a whole to the high transfer efficiency applicator. The step of providing may be described as a continuous process or a batch process. Similarly, the step of providing may include continuous sub-steps and/or batch sub-steps. In various embodiments, the step of providing is described as pumping the composition to the applicator under pressure. The step of providing may be as understood by one of skill in the art.

The method also includes the step of applying the coating composition to the substrate through the high transfer efficiency applicator to form the coating layer on the substrate. Typically, the step of applying is further defined as jetting or printing through, with, or by, the applicator. During the step of applying, a loss of volatiles after application through the high transfer efficiency applicator is less than about 0.5 weight percent based on a total weight of the coating composition. In various embodiments, this amount is less than about 0.4, 0.3, 0.2, or 0.1, weight percent based on a total weight of the coating composition. Typically, the terminology "volatiles" is defined as substances which will evaporate thereby resulting in a weight loss of the coating composition. Loss of volatiles after application would be determined by the increase in % solids after oven before application where % solids in each case would be determined by gravimetrically by ASTM D2369-10, In various non-limiting embodiments, all values and ranges of values, both whole and fractional, including and between the aforementioned values, are hereby expressly contemplated for use herein.

In certain embodiments, the step of applying produces droplets of the coating composition that impact the substrate. In various embodiments, at least about 99, 99.1, 99.2, 99.3, 99.4, 99.5, 99.6, 99.7, 99.8, 99.9, or even higher, % of the droplets of the coating composition expelled from the high transfer efficiency applicator contact the substrate. Without being bound by theory, it is believed that an increase in the number of droplets contacting the substrate relative to the number of droplets that do not contact the substrate thereby entering the environment, improves efficiency of application of the coating composition, reduces waste generation, and reduces maintenance.

In various embodiments, at least about 99.5, 99.6, 99.7, 99.8, 99.9, or even higher, % of the droplets of the coating composition expelled from the high transfer efficiency applicator remain as a single droplet after contact with the substrate. Without being bound by theory, it is believed that splashing of the coating composition resulting from impact with the substrate can be minimized or eliminated by applying the coating composition utilizing the high transfer efficiency applicator. In various non-limiting embodiments, all values and ranges of values, both whole and fractional, including and between the aforementioned values, are hereby expressly contemplated for use herein.

In various embodiments, at least about 99.5, 99.6, 99.7, 99.8, 99.9, or even higher, % of the droplets of the coating composition expelled from the high transfer efficiency applicator remain as a single droplet or stream after expulsion from the high transfer efficiency applicator. Without being bound by theory, it is believed that the formation of satellite droplets can be reduced or eliminated by applying the coating composition utilizing the high transfer efficiency applicator. Satellite droplet formation may be reduced by considering the impact velocity and the nozzle diameter. In various non-limiting embodiments, all values and ranges of values, both whole and fractional, including and between the aforementioned values, are hereby expressly contemplated for use herein.

In various embodiments, liquid paint is ejected from one or more nozzles of the high transfer efficiency applicator in an engineered/controlled fashion that creates a fine stream, that may or may not breakup into droplets. This stream is targeted to the substrate such that drops arrive at specific locations to potentially form a continuous film or pattern on the subject. As a result, in many embodiments, there is essentially no overspray (drops missing their target) and nearly 100% transfer efficiency (all paint goes to targeted location on the substrate.) As will be appreciated by one of skill in the art, some allowance is made for start-up and stopping the high transfer efficiency applicator. Devices of this type can be described as drop-on-demand, stream-on demand, overspray-free, or ultra-high transfer efficiency applicators. These devices are different from spray atomization devices and techniques wherein energy, such as pneumatic, hydraulic, or centrifugal, energy, is introduced to create a partially controlled, random distribution of droplet sizes, trajectories and speeds, and wherein some additional mechanism, e.g. electrostatics and or shaping air, then guides a paint droplet cloud to a substrate. Relative to traditional paint spray, there is always some overspray and transfer efficiency loss.

The high transfer efficiency applicator itself may be any known in the art. For example, in various embodiments, the applicator is as described in one or more of patent numbers US20150375258A1, US20040217202 A1, US 2009/0304936 A1,US 7,824,015 B2, US 8,091,987 B2, WO 2018/206309 A1, each of which are expressly incorporated herein in their entirety for use in various non-limiting embodiments. The applicator may be alternatively described as a print head.

In one embodiment, the high transfer efficiency applicator includes a nozzle that defines a nozzle orifice and may have a nozzle diameter of from about 0.00002 m to about 0.0004 m. In another embodiment, the applicator may be fluidly connected to a reservoir configured to contain the coating composition. For example, the high transfer efficiency applicator may be configured to receive the coating composition from the reservoir and configured to expel the coating composition through the nozzle orifice to the substrate to form a coating layer. It is to be appreciated that ranges for the nozzle diameter, viscosity, density, surface tension, and relaxation time may be defined by any of the ranges described herein or any known in the art. In various non-limiting embodiments, all values and ranges of values, both whole and fractional, including and between the aforementioned values, are hereby expressly contemplated for use herein.

The high transfer efficiency applicator may be configured to expel the coating composition through the nozzle orifice at an impact velocity of from about 0.2 m/s to about 20 m/s. Alternatively, the high transfer efficiency applicator may be configured to expel the coating composition through the nozzle orifice at an impact velocity of from about 0.4 m/s to about 10 m/s. The nozzle orifice may have a nozzle diameter of from about 0.00004 m to about 0.00025 m. The coating composition may be expelled from the high transfer efficiency applicator as a droplet having a particle size of at least 10 microns. In various non-limiting embodiments, all values and ranges of values, both whole and fractional, including and between the aforementioned values, are hereby expressly contemplated for use herein.

It is contemplated that one, two, three, or even more applicators may be used in conjunction with each other. Each of the applicators may independently be as described herein or may be any known in the art.

In various embodiments, the high transfer efficiency applicator includes a plurality of nozzles with each of the nozzles defining a nozzle orifice. The plurality of the nozzles may be arranged in a linear configuration relative to one another along a first axis. For example, in various embodiments, the plurality of the nozzles includes a nozzle A and a nozzle B adjacent the nozzle A. The nozzle A and the nozzle B can be spaced from each other in a nozzle distance. The high transfer efficiency applicator distance from the substrate can be substantially the same as the nozzle distance.

In one embodiment, the plurality of the nozzles are spaced relative to each other to form a rectangular array and wherein the plurality of the nozzles can be configured to alternate expelling of the coating composition between adjacent nozzles of the rectangular array to reduce sag of the coating composition.

In various embodiments, the high transfer efficiency applicator includes fifty nozzles aligned along a y-axis. However, it is to be appreciated that an applicator can include any number of nozzles. Each nozzle may be actuated independent of the other nozzles to apply the coating composition to the substrate. During jetting, independent actuation of the nozzles can provide control for placement of each of the droplets of the coating composition on the substrate.

Two or more applicators may be coupled together to form a print head assembly. In certain embodiments, the applicators are aligned together such that the y-axis of each of the applicators are parallel to the other y-axes. Further, the nozzles of each of the applicators may be aligned with each other along an x-axis, which is perpendicular to the y-axis, such that an "array" is formed. One nozzle may be equally spaced from the other nozzles directly adjacent the one nozzle, relative to the x-axis and the y-axis. This configuration of nozzles may be suitable for applying the same coating composition by each of the applicators to the substrate as the print head assembly moves along the x-axis. Without being bound by theory, it is believed that equal spacing of the nozzles, relative to both the x-axis and the y-axis, may result in uniform application of the same coating composition on the substrate. Uniform application of the same coating composition may be suitable for single-color applications, two-tone color applications, and the like.

Alternatively, one set of nozzles along a first y-axis may be closely spaced to another set of nozzles relative to the spacing of each of the nozzles along the y-axis of a single high transfer efficiency applicator. This configuration of nozzles may be suitable for applying different coating compositions by each of the high transfer efficiency applicators to the substrate. Different coating compositions utilized within the same high transfer efficiency applicator assembly may be suitable for logos, designs, signage, striped, camouflage appearance, and the like.

The nozzles of the high transfer efficiency applicator may have any configuration known in the art, such as linear, concave relative to the substrate, convex relative to the substrate, circular, and the like. Adjustment of the configuration of the nozzles may be necessary to facilitate cooperation of the high transfer efficiency applicator to substrates having irregular configurations, such as vehicles including mirrors, trim panels, contours, spoilers, and the like.

The high transfer efficiency applicator may be configured to blend individual droplets to form a desired color. The high transfer efficiency applicator may include nozzles to apply cyan coating compositions, magenta coating compositions, yellow coating compositions, and black coating compositions. The properties of coating compositions may be modified to promote blending. Further, agitation sources, such as air movement or sonic generators may be utilized to promote blending of the coating compositions. The agitation sources may be coupled to the high transfer efficiency applicator or separate therefrom.

Identifying suitable properties of the coating composition for use in the high transfer efficiency applicator may be dependent on properties of the high transfer efficiency applicator. Properties of the high transfer efficiency applicator may include, but are not limited to, nozzle diameter of the high transfer efficiency applicator, impact velocity of the coating composition by the high transfer efficiency applicator, speed of the high transfer efficiency applicator, distance of the high transfer efficiency applicator from the substrate, droplet size of the coating composition by the high transfer efficiency applicator, firing rate of the high transfer efficiency applicator, and orientation of the high transfer efficiency applicator relative to the force of gravity.

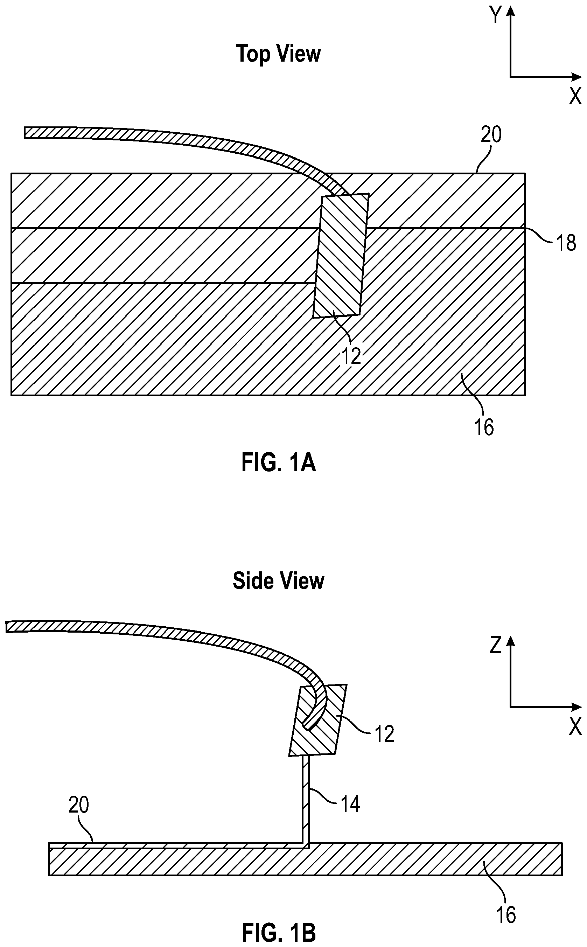

In one embodiment, e.g. as shown in FIGS. 1A and 1B, a high transfer efficiency applicator jets a stream of the composition 14 onto the substrate 16. In FIG. 1A, a space 18 is shown between stripes 20 of the composition 14 disposed on the substrate 16. This space 18 is preferably minimized or eliminated. However, those of skill in the art appreciate that overlapping the stripes 20 can unintentionally lead to overlap and undesirable buildup of the composition and the formation of a type of "hill" or raised section of the substrate. This is also preferably minimized.

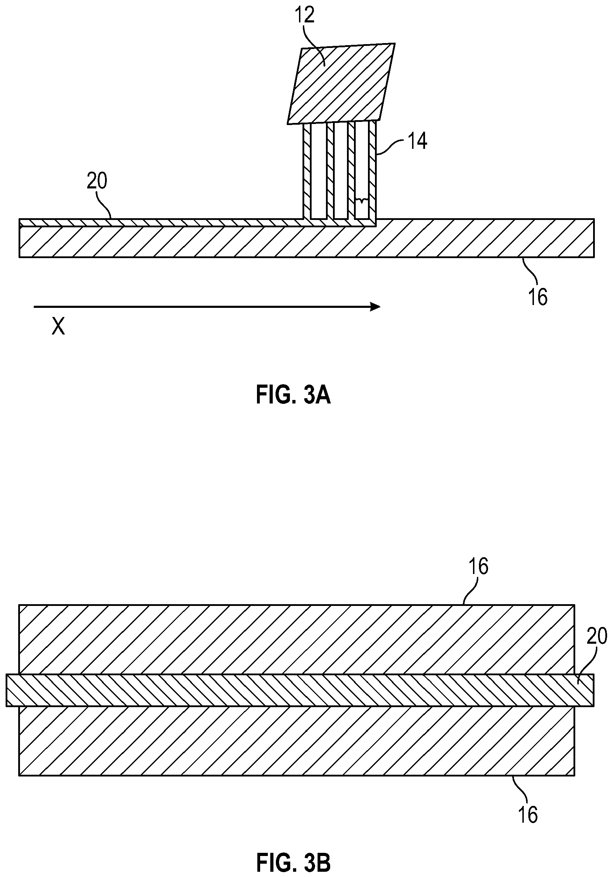

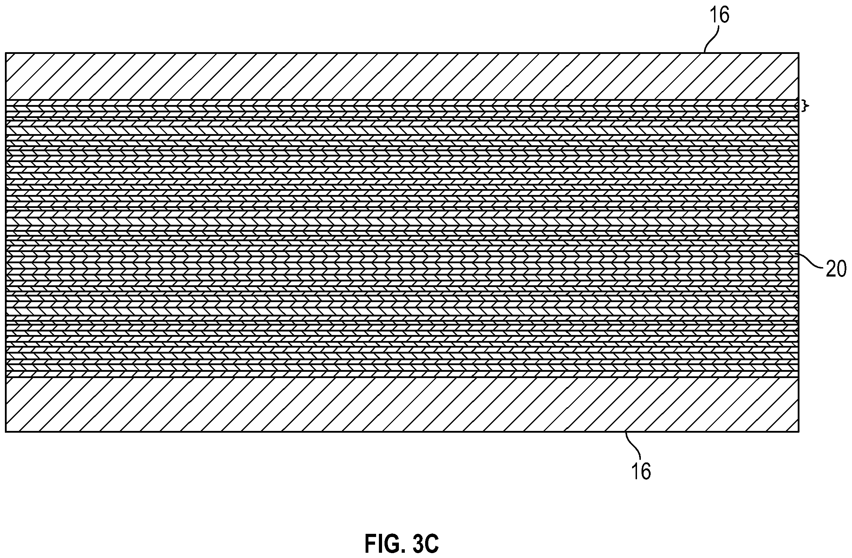

In FIGS 3A-3C, single nozzle lines are shown and can be defined as having a periodically repeating pattern that has spacing consistent with the spacing between nozzles of the high transfer efficiency applicator. This defect can be straight or squiggly. The defect may have breaks in it. Defects may appear smooth or may be raised. In FIG. 3B, each stripe is a single pass of ~50 nozzles. FIG. 3C shows as magnified view of FIG. 3A relative to a single pass of a high transfer efficiency applicator. A defect is present wherein each nozzle jet of the composition impacted a substrate 16.

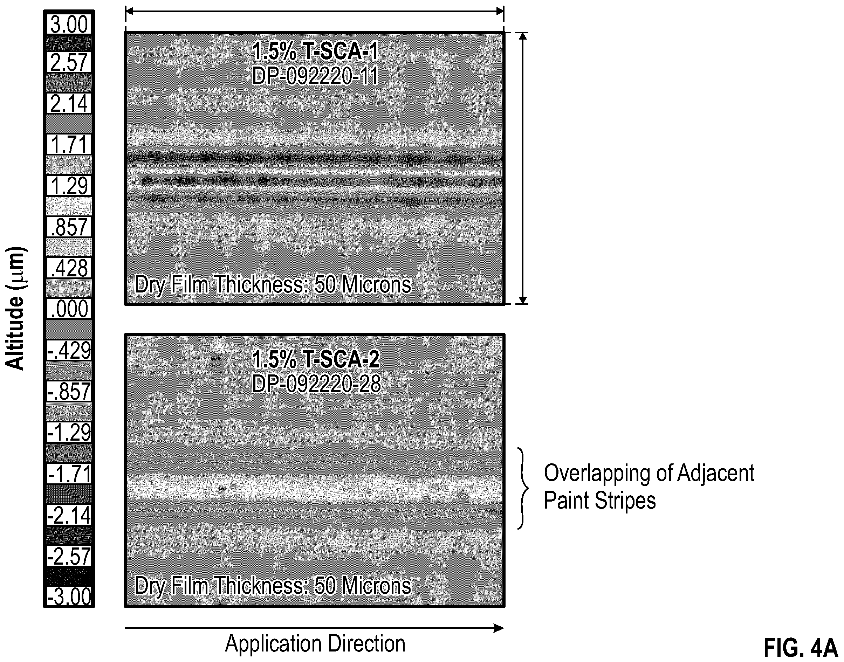

In FIG. 4A, an Optimap^{™} PSD uses phase stepped deflectometry to determine the surface profile of an area approximately 79 x 57 mm. Here, two coating surface profiles are shown which include the region of stripe overlap. The color scale corresponding to coating height differences is shown on the left. Green represents the average coating surface height, red represents a "hill" having a greater height than average (up to 3 microns) and blue represents a valley (down to 3 microns) less than the surface average. The stripe overlap region is observed as a defect parallel to the direction of application and becomes more visible as the hills and valleys become more pronounced.

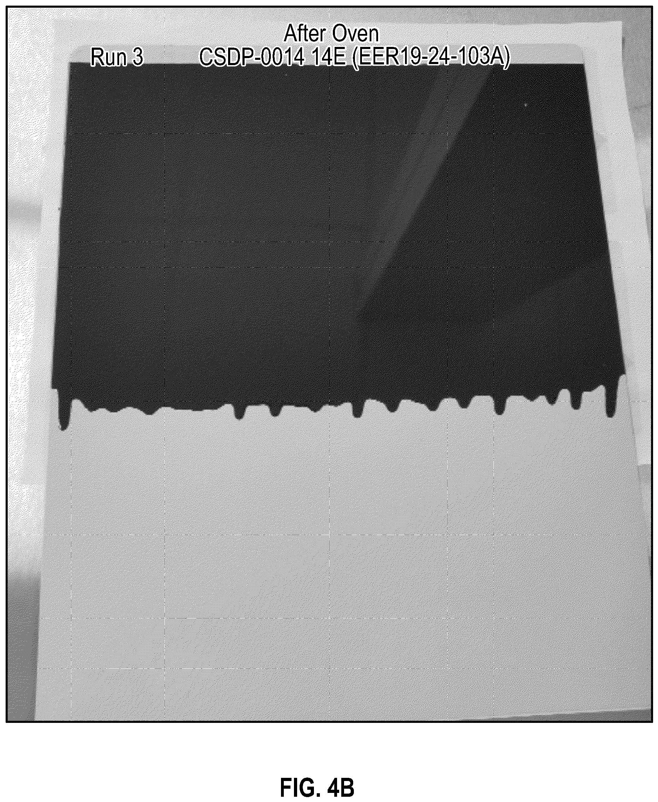

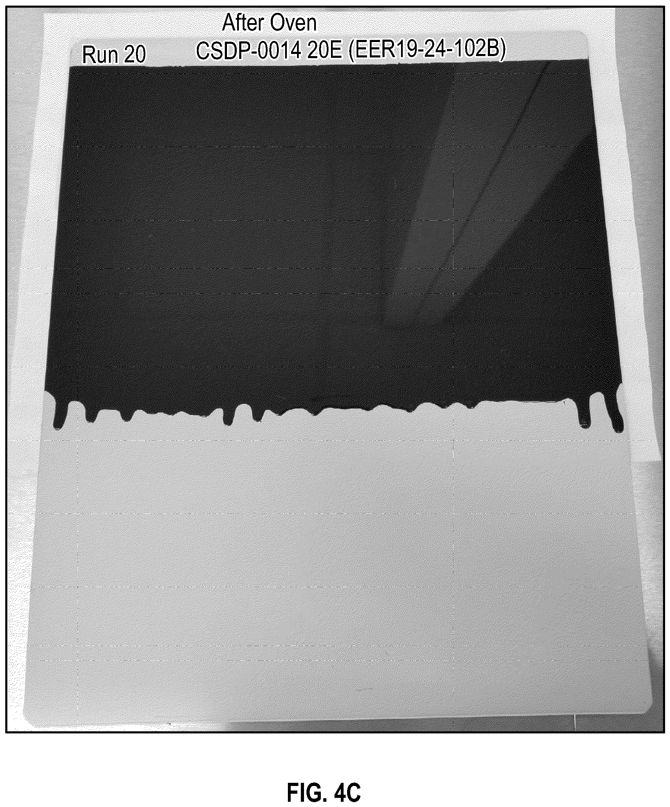

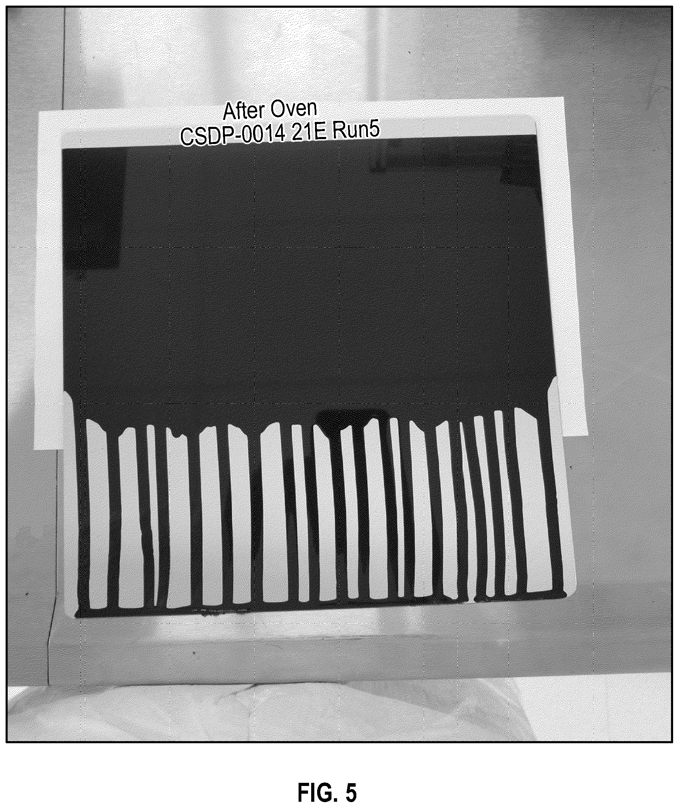

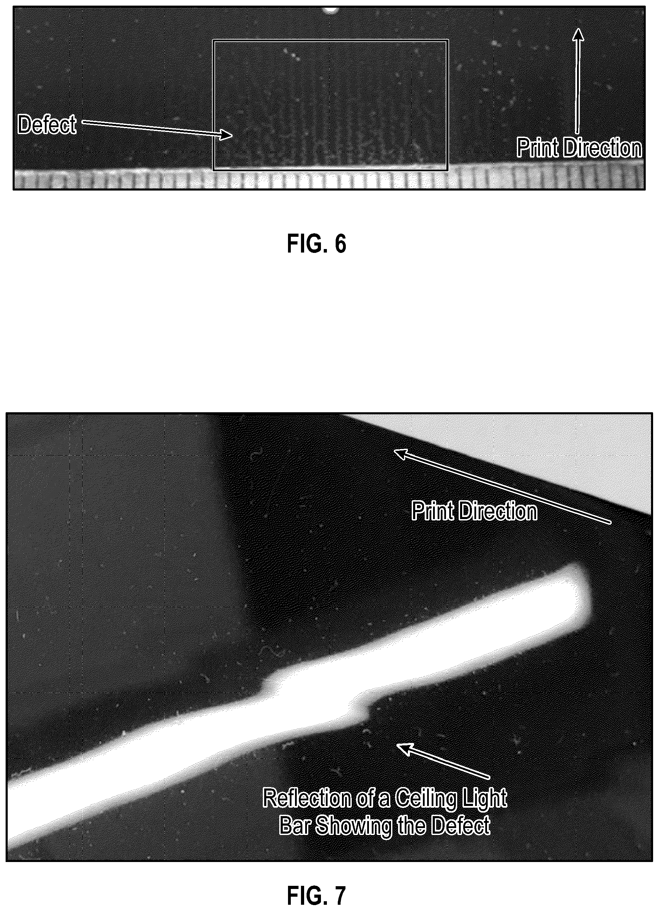

FIGS. 4B and 4C are photographs showing sag of Examples 10 and 11, respectively. FIG. 5 is a photograph showing sag of a comparative composition with no rheology control agent is incorporated therein leading to very poor sag resistance. FIG. 6 is a photograph of a substrate with a comparative composition disposed thereon showing visible nozzle line defect. FIG. 7 is a photograph of a substrate with a comparative composition disposed thereon showing stripe overlap defect.

### Coating Composition:

Referring now to the composition itself, the composition is solvent borne and may be a one-component composition or a two-component composition. Each is described below.

### One-Component Composition:

In various embodiments, the composition is, includes, consists essentially of, or consist of: a resin comprising an acrylic, a polyester, or combinations thereof; a melamine cross-linker; an optional pigment; an organic solvent; and at least one polyurea crystal sag control agent. For example, the terminology "consists essentially of" may describe embodiments that are free from resins or polymers not described herein or described herein as optional, cross-linkers not described herein or described herein as optional, pigments not described herein or described herein as optional, organic solvents not described herein or described herein as optional, and sag control and/or rheology control agents not described herein or described herein as optional. The terminology "free of" or "free from" may be describe that the composition includes less than about 10, 9, 8, 7, 6, 5, 4, 3, 2, 1, 0.5, or 0.1, weight percent, e.g. weight percent actives, of that compound based on a total weight of the composition. Alternatively, the terminology "free of" or "free from" may be describe that the composition is entirely free from the compound.

### Two-Component Composition:

In various embodiments, the composition is, includes, consists essentially of, or consists of a hydroxyl-functional resin; an isocyanate cross-linker; an optional pigment; an organic solvent; and at least one polyurea crystal sag control agent. For example, the terminology "consists essentially of" may describe embodiments that are free from resins or polymers not described herein or described herein as optional, cross-linkers not described herein or described herein as optional, pigments not described herein or described herein as optional, organic solvents not described herein or described herein as optional, and sag control and/or rheology control agents not described herein or described herein as optional. The terminology "free of" or "free from" may be describe that the composition includes less than about 10, 9, 8, 7, 6, 5, 4, 3, 2, 1, 0.5, or 0.1, weight percent, e.g. weight percent actives, of that compound based on a total weight of the composition. Alternatively, the terminology "free of" or "free from" may be describe that the composition is entirely free from the compound. In various non-limiting embodiments, all values and ranges of values, both whole and fractional, including and between the aforementioned values, are hereby expressly contemplated for use herein.

### Resin Comprising an Acrylic, a Polyester, or Combinations Thereof

Relative to the one-component composition, the resin may be, include, consist essentially of, or consist of, an acrylic, a polyester, or combinations thereof. For example, the terminology "consist essentially of" may describe embodiments that are free of an acrylic, a polyester, or any other polymer known in the art, wherein "free of" is as described above. For example, the composition, and/or resin itself, may include an acrylic and be free of a polyester and/or any other polymer. Alternatively, the composition, and/or the resin itself, may include a polyester and be free of an acrylic and/or any other polymer. The composition and/or the resin itself may include both an acrylic and a polyester and be free of any other polymer.

In various embodiments, the acrylic may be, include, consist essentially of, or consist of the reaction product of one or more of the following monomers including, but not limited to, (meth)acrylamide, N-substituted (meth)acrylamide, octyl(meth)acrylate, nonylphenol ethoxylate(meth)acrylate, isononyl(meth)acrylate, 1,6-hexanediol(meth)acrylate, isobornyl(meth)acrylate, 2-(2-ethoxyethoxy)ethyl(meth)acrylate, 2-ethylhexyl(meth)acrylate, lauryl(meth)acrylate, beta-carboxyethyl(meth)acrylate, isobutyl(meth)acrylate, cycloaliphatic epoxide, alpha-epoxide, 2-hydroxyethyl(meth)acrylate, (meth)acrylonitrile, maleic anhydride, itaconic acid, isodecyl(meth)acrylate, dodecyl(meth)acrylate, n-butyl(meth)acrylate, methyl(meth)acrylate, hexyl(meth)acrylate, (meth)acrylic acid, N-vinylcaprolactam, stearyl(meth)acrylate, hydroxy functional caprolactone ester(meth)acrylate, octodecyl(meth)acrylate, isooctyl(meth)acrylate, hydroxyethyl(meth)acrylate, hydroxymethyl(meth)acrylate, hydroxypropyl(meth)acrylate, hydroxyisopropyl(meth)acrylate, hydroxybutyl(meth)acrylate, hydroxyisobutyl(meth)acrylate, tetrahydrofurfuryl(meth)acrylate, combinations of these, and the like.

In other embodiments, the acrylic may be, include, consist essentially of, or consist of one or more of (meth)acrylated urethanes (i.e., urethane(meth)acrylates), (meth)acrylated epoxies (i.e., epoxy (meth)acrylates), (meth)acrylated polyesters (i.e., polyester(meth)acrylates), (meth)acrylated(meth)acrylics, (meth)acrylated silicones, (meth)acrylated amines, (meth)acrylated amides; (meth)acrylated polysulfones; (meth)acrylated polyesters, (meth)acrylated polyethers (i.e., polyether (meth)acrylates), vinyl(meth)acrylates, and (meth)acrylated oils.

In various embodiments, the polyester may be, include, consist essentially of, or consist of, any polyester known in the art. For example, the polyester may be linear or branched. Useful polyesters can include esterification products of aliphatic or aromatic dicarboxylic acids, polyols, diols, aromatic or aliphatic cyclic anhydrides and cyclic alcohols. Non-limiting examples of suitable cycloaliphatic polycarboxylic acids are tetrahydrophthalic acid, hexahydrophthalic acid, 1,2-cyclohexanedicarboxylic acid, 1,3-cyclohexanedicarboxylic acid, 1,4-cyclohexanedicarboxylic acid, 4-methylhexahydrophthalic acid, endomethylenetetrahydrophthalic acid, tricyclodecanedicarboxylic acid, endoethylenehexahydrophthalic acid, camphoric acid, cyclohexanetetracarboxylic, and cyclobutanetetracarboxylic acid. The cycloaliphatic polycarboxylic acids can be used not only in their cis but also in their trans form and as a mixture of both forms. Further non-limiting examples of suitable polycarboxylic acids can include aromatic and aliphatic polycarboxylic acids, such as, for example, phthalic acid, isophthalic acid, terephthalic acid, halogenophthalic acids, such as, tetrachloro- or tetrabromophthalic acid, adipic acid, glutaric acid, azelaic acid, sebacic acid, fumaric acid, maleic acid, trimellitic acid, and pyromellitic acid. Combinations of polyacids, such as a combination of polycarboxylic acids and cycloaliphatic polycarboxylic acids can be suitable. Combinations of polyols can also be suitable.

Non-limiting examples of suitable polyesters include a branched copolyester polymer. The branched copolyester polymer and process for production described in U.S. Patent No. 6,861,495 can be suitable. Monomers with multifunctional groups such as AxBy (x,y=1 to 3, independently) types including those having one carboxyl group and two hydroxyl groups, two carboxyl groups and one hydroxyl group, one carboxyl group and three hydroxyl groups, or three carboxyl groups and one hydroxyl group can be used to create branched structures. Non-limiting examples of such monomers include 2,3 dihydroxy propionic acid, 2,3 dihydroxy 2-methyl propionic acid, 2,2 dihydroxy propionic acid, 2,2-bis(hydroxymethyl) propionic acid, and the like.

The polyester can be conventionally polymerized from a monomer mixture containing a chain extender selected from the group of a hydroxy carboxylic acid, a lactone of a hydroxy carboxylic acid, and a combination thereof; and one or more branching monomers. Some of the suitable hydroxy carboxylic acids include glycolic acid, lactic acid, 3-hydroxypropionic acid, 3-hydroxybutyric acid, 3-hydroxyvaleric acid, and hydroxypyvalic acid. Some of the suitable lactones include caprolactone, valerolactone; and lactones of the corresponding hydroxy carboxylic acids, such as, e.g., 3-hydroxypropionic acid, 3-hydroxybutyric acid, 3-hydroxyvaleric acid, and hydroxypyvalic acid. In certain embodiments, caprolactone can is utilized. In embodiments, the branched copolyester polymer can be produced by polymerizing, in one step, the monomer mixture that includes the chain extender and hyper branching monomers, or by first polymerizing the hyper branching monomers followed by polymerizing the chain extenders. It is to be appreciated that the branched copolyester polymer can be formed from acrylic core with extending monomers described above.

In various embodiments, the resin comprising an acrylic, a polyester, or combinations thereof is utilized in an amount of from about 10 to about 40, about 15% to about 35%, or about 20% to about 30%, weight percent based on a total weight percent of the composition. In various non-limiting embodiments, all values and ranges of values, both whole and fractional, including and between the aforementioned values, are hereby expressly contemplated for use herein.

### Hydroxyl-Functional Resin:

The hydroxyl-functional resin is not particularly limited and may be any known in the art. In various embodiments, this resin may be, include, consist essentially of, or consist of, aliphatic or aromatic dicarboxylic acids, polyols, diols, aromatic or aliphatic cyclic anhydrides and cyclic alcohols. Non-limiting examples of suitable cycloaliphatic polycarboxylic acids are tetrahydrophthalic acid, hexahydrophthalic acid, 1,2-cyclohexanedicarboxylic acid, 1,3-cyclohexanedicarboxylic acid, 1,4-cyclohexanedicarboxylic acid, 4-methylhexahydrophthalic acid, endomethylenetetrahydrophthalic acid, tricyclodecanedicarboxylic acid, endoethylenehexahydrophthalic acid, camphoric acid, cyclohexanetetracarboxylic, and cyclobutanetetracarboxylic acid. The cycloaliphatic polycarboxylic acids can be used not only in their cis but also in their trans form and as a mixture of both forms. Further non-limiting examples of suitable polycarboxylic acids can include aromatic and aliphatic polycarboxylic acids, such as, for example, phthalic acid, isophthalic acid, terephthalic acid, halogenophthalic acids, such as, tetrachloro- or tetrabromophthalic acid, adipic acid, glutaric acid, azelaic acid, sebacic acid, fumaric acid, maleic acid, trimellitic acid, and pyromellitic acid. Combinations of polyacids, such as a combination of polycarboxylic acids and cycloaliphatic polycarboxylic acids can be suitable. Combinations of polyols can also be suitable.

Non-limiting suitable polyhydric alcohols include ethylene glycol, propanediols, butanediols, hexanediols, neopentylglycol, diethylene glycol, cyclohexanediol, cyclohexanedimethanol, trimethylpentanediol, ethylbutylpropanediol, ditrimethylolpropane, trimethylolethane, trimethylolpropane, glycerol, pentaerythritol, dipentaerythritol, polyethylene glycol and polypropylene glycol. If desired, monohydric alcohols, such as, for example, butanol, octanol, lauryl alcohol, ethoxylated or propoxylated phenols may also be included along with polyhydric alcohols. Alternatively, low molar mass polyols defined by an empirical and structural formula, such as polyhydric alcohols can be utilized. In other embodiments, oligomeric or polymeric polyols with number-average molar masses of, for example, up to 8000, alternatively up to 5000, alternative up to 2000, and/or, for example, corresponding hydroxyl-functional polyethers, polyesters or polycarbonates are utilized.

In various embodiments, the hydroxyl-functional resin is utilized in an amount of from about 10% to about 50%, about 10 to about 40%, about 12% to about 30%, or about 15% to about 25%, weight percent based on a total weight percent of the composition. In various non-limiting embodiments, all values and ranges of values, both whole and fractional, including and between the aforementioned values, are hereby expressly contemplated for use herein.

The composition of this disclosure may include a cross-linker. The term "crosslinker" refers to a component having "crosslinking-functional groups" that are functional groups positioned in each molecule of the compounds, oligomer, polymer, the backbone of the polymer, pendant from the backbone of the polymer, terminally positioned on the backbone of the polymer, or a combination thereof, wherein these functional groups are capable of crosslinking with the crosslinkable-functional groups (during the curing step) to produce a coating in the form of crosslinked structures. One of ordinary skill in the art would recognize that certain combinations of crosslinking-functional group and crosslinkable-functional groups would be excluded, since they would fail to crosslink and produce the film forming crosslinked structures.

### Isocyanate Cross-Linker:

The isocyanate cross-linker is not particularly limited and may be any known in the art. In various embodiments, this isocyanate cross-linker may be, include, consist essentially of, or consist of, one or more isocyanates such as, but not limited to, aromatic, aliphatic or cycloaliphatic di-, tri- or tetra-isocyanates, including polyisocyanates having isocyanurate structural units, such as, the isocyanurate of hexamethylene diisocyanate and isocyanurate of isophorone diisocyanate; the adduct of two molecules of a diisocyanate, such as, hexamethylene diisocyanate and a diol such as, ethylene glycol; uretidiones of hexamethylene diisocyanate; uretidiones of isophorone diisocyanate or isophorone diisocyanate; the adduct of trimethylol propane and meta-tetramethylxylene diisocyanate.

In various embodiments, isocyanates such as, for example, oligomers based on hexamethylene diisocyanate (HDI), diphenylmethane diisocyanate (MDI), isophorone diisocyanate (IPDI), or toluidine diisocyanate (TDI), e.g. isocyanurates, biuret, allophanates, and adducts of the isocyanates mentioned with polyhydric alcohols and mixtures thereof can be used. These can react with polyols such as, for example, OH group-containing polyesters, polyethers, acrylates and polyurethane, and mixtures thereof, which polyols may be solvent-based, solvent-free, or water-dilutable. In various embodiments, monofunctional isocyanates are contemplated for use herein, as selected by one of skill in the art. In other embodiments, blocked isocyanates are contemplated for use herein, as selected by one of skill in the art.

In various embodiments, the isocyanate cross-linker is utilized in an amount of from about 3 to about 6 or about 3, 4, 5, or 6, weight percent based on a total weight percent of the composition. In various non-limiting embodiments, all values and ranges of values, both whole and fractional, including and between the aforementioned values, are hereby expressly contemplated for use herein.

### Optional Cross-Linker:

In various embodiments, an isocyanate cross-linker is not used and a melamine cross-linker is used. Alternatively, both an isocyanate cross-linker and a melamine cross-linker can be used. In various embodiments, this optionally cross-linker may be, include, consist essentially of, or consist of, any melamine cross-linker known in the art.

Melamine resins may be partially or fully etherified with one or more alcohols like methanol or butanol. A non-limiting example is hexamethoxymethyl melamine. Non-limiting examples of suitable melamine resins include monomeric melamine, polymeric melamine-formaldehyde resin, or a combination thereof. The monomeric melamines include low molecular weight melamines which contain, on an average, three or more methylol groups etherized with a C₁ to C₅ monohydric alcohol such as methanol, n-butanol, or isobutanol per triazine nucleus, and have an average degree of condensation up to about 2 and, in certain embodiments, in the range of from about 1.1 to about 1.8, and have a proportion of mononuclear species not less than about 50 percent by weight. By contrast the polymeric melamines have an average degree of condensation of more than about 1.9. Some such suitable monomeric melamines include alkylated melamines, such as methylated, butylated, isobutylated melamines and mixtures thereof. Many of these suitable monomeric melamines are supplied commercially. For example, Cytec Industries Inc., West Patterson, N.J. supplies Cymel^{®} 301 (degree of polymerization of 1.5, 95% methyl and 5% methylol), Cymel^{®} 350 (degree of polymerization of 1.6, 84% methyl and 16% methylol), 303, 325, 327, 370 and XW3106, which are all monomeric melamines. Suitable polymeric melamines include high amino (partially alkylated, -N, -H) melamine known as Resimene^{®} BMP5503 (molecular weight 690, polydispersity of 1.98, 56% butyl, 44% amino), which is supplied by Solutia Inc., St. Louis, Mo., or Cymel^{®}1158 provided by Cytec Industries Inc., West Patterson, N.J. Cytec Industries Inc. also supplies Cymel^{®} 1130@80 percent solids (degree of polymerization of 2.5), Cymel^{®} 1133 (48% methyl, 4% methylol and 48% butyl), both of which are polymeric melamines. In various non-limiting embodiments, all values and ranges of values, both whole and fractional, including and between the aforementioned values, are hereby expressly contemplated for use herein.

The coating composition may include more than one type of crosslinking agent that have the same or different crosslinking-functional groups. Typical crosslinking-functional groups can include hydroxyl, thiol, isocyanate, thioisocyanate, acetoacetoxy, carboxyl, primary amine, secondary amine, epoxy, anhydride, ketimine, aldimine, orthoester, orthocarbonate, cyclic amide, or combinations thereof.

In various embodiments, the optional cross-linker, e.g. a melamine cross-linker, is utilized in an amount of from about 0 to about 30, about 5 to about 30, about 12 to about 25, or about 15 to about 20, weight percent based on a total weight percent of the composition. In other embodiments, this amount is from about 5 to about 25, about 10 to about 20, about 10 to about 15, weight percent based on a total weight percent of the composition. In various non-limiting embodiments, all values and ranges of values, both whole and fractional, including and between the aforementioned values, are hereby expressly contemplated for use herein.

In exemplary embodiments, the coating composition includes a melamine-formaldehyde resin having the tradename Cymel^{®} 303 which is commercially available from Cytec Industries Inc. of West Patterson, N.J.

### Optional Pigment:

Any pigment known in the art for use in coating compositions may be utilized in the coating composition. Non-limiting examples of suitable pigments include metallic oxides, metal hydroxide, effect pigments including metal flakes, chromates, such as lead chromate, sulfides, sulfates, carbonates, carbon black, silica, talc, china clay, phthalocyanine blues and greens, organo reds, organo maroons, pearlescent pigments, other organic pigments and dyes, and combinations thereof. If desired, chromate-free pigments, such as barium metaborate, zinc phosphate, aluminum triphosphate and combinations thereof, can also be utilized.

Further non-limiting examples of suitable effect pigments include bright aluminum flake, extremely fine aluminum flake, medium particle size aluminum flake, and bright medium coarse aluminum flake; mica flake coated with titanium dioxide pigment also known as pearl pigments; and combinations thereof. Non-limiting examples of suitable colored pigments include titanium dioxide, zinc oxide, iron oxide, carbon black, mono azo red toner, red iron oxide, quinacridone maroon, transparent red oxide, dioxazine carbazole violet, iron blue, indanthrone blue, chrome titanate, titanium yellow, mono azo permanent orange, ferrite yellow, mono azo benzimidazolone yellow, transparent yellow oxide, isoindoline yellow, tetrachloroisoindoline yellow, anthanthrone orange, lead chromate yellow, phthalocyanine green, quinacridone red, perylene maroon, quinacridone violet, pre-darkened chrome yellow, thio-indigo red, transparent red oxide chip, molybdate orange, molybdate orange red, and combinations thereof.

As also introduced above, the coating composition may further include extender pigments. While extender pigments are generally utilized to replace higher cost pigments in coating compositions, the extender pigments as contemplated herein may increase shear viscosity of the coating composition as compared to a coating composition free of the extender pigments. An increase in shear viscosity of the coating composition may improve suitability of the coating composition for application to the substrate utilizing the high transfer efficiency applicator. The extender pigment may have a particle size of from about 0.01 to about 44 microns. The extender pigment may have a variety of configurations including, but not limited to, nodular, platelet, acicular, and fibrous. Non-limiting examples of suitable extender pigments include whiting, barytes, amorphous silica, fumed silica, diatomaceous silica, china clay, calcium carbonate, phyllosilicate (mica), wollastonite, magnesium silicate (talc), barium sulfate, kaolin, and aluminum silicate. In various non-limiting embodiments, all values and ranges of values, both whole and fractional, including and between the aforementioned values, are hereby expressly contemplated for use herein.

The coating composition may include the extender pigment in an amount of from about 0.1 to about 50, alternatively from about 1 to about 20, or alternatively from about 1 to about 10, wt.%, based on a total weight of the coating composition. In certain embodiments, the coating composition includes magnesium silicate (talc), barium sulfate, or a combination thereof. In various embodiments, inclusion of barium sulfate as the extender pigment results in a coating composition having greater shear viscosity as compared to inclusion of talc as the extender pigment. In various non-limiting embodiments, all values and ranges of values, both whole and fractional, including and between the aforementioned values, are hereby expressly contemplated for use herein.

In various embodiments, the optional pigment is chosen from Pigment Yellow 213, PY 151, PY 93, PY 83, Pigment Red 122, PR 168, PR 254, PR 179, Pigment Red 166, Pigment Red 48:2, Pigment Violet 19, Pigment Blue 15:1, Pigment Blue 15:3, Pigment Blue 15:4, Pigment Green 7, Pigment Green 36, Pigment Black 7 or Pigment White 6, and combinations thereof.

### Organic Solvent:

The composition may also include an organic solvent. Non-limiting examples of suitable organic solvents can include aromatic hydrocarbons, such as, toluene, xylene; ketones, such as, acetone, methyl ethyl ketone, methyl isobutyl ketone, methyl amyl ketone and diisobutyl ketone; esters, such as, ethyl acetate, n-butyl acetate, isobutyl acetate, and a combination thereof. In embodiments, the evaporation rate of the solvent may have an impact on the suitability of the coating composition for printing. Certain co-solvents may be incorporated into the coating composition having increased or decreased evaporation rates thereby increasing or decreasing the evaporation rate of the coating composition.

In various embodiment, the organic solvent content is greater than about 50 wt.%, alternatively greater than 60 wt.%, alternatively greater than 70 wt.%, alternatively greater than 80 wt.%, or alternatively greater than 90 wt.%, based on a total weight of liquid carrier in the coating composition. In various non-limiting embodiments, all values and ranges of values, both whole and fractional, including and between the aforementioned values, are hereby expressly contemplated for use herein.

### At Least One Polyurea Crystal Sag Control Agent:

The composition also includes at least one polyurea crystal sag control agent. This agent is the reaction product of an amine and an isocyanate. Both the amine and the isocyanate are not particularly limited and may be any known in the art or described above. For example, the amine may be a primary or secondary amines. The amines typically include hydroxyl and/or ether groups. In various embodiments, the amine is a mono-, di-, tri-, or poly-amine. In various embodiments, the use of di-, tri-, and/or poly- amines requires use of a monofunctional isocyanate.

The at least one polyurea crystal sag control agent has a melting point of from about 50°C to about 150°C. In various embodiments, this melting point is from about 55 to about 145, about 60 to about 140, about 65 to about 135, about 70 to about 130, about 75 to about 125, about 80 to about 120, about 85 to about 115, about 90 to about 110, about 95 to about 105, about 100 to about 105, about 50 to about 100, about 55 to about 95, about 60 to about 90, about 65 to about 85, about 70 to about 80, about 70 to about 75, about 50 to about 120, about 55 to about 115, about 60 to about 110, about 65 to about 105, about 70 to about 100, about 75 to about 95, about 80 to about 90, about 80 to about 85, about 120 to about 150, about 125 to about 145, about 130 to about 140, or about 130 to about 135, °C. In various non-limiting embodiments, all values and ranges of values, both whole and fractional, including and between the aforementioned values, are hereby expressly contemplated for use herein.

In various embodiments, the at least one polyurea crystal sag control agent is present in an amount of from about 0.1 to about 4 weight percent based on a total weight of the coating composition. In other embodiments, the at least one polyurea crystal sag control agent is present in an amount of about 0.2 to about 3.9, about 0.3 to about 3.8, about 0.4 to about 3.7, about 0.5 to about 3.6, about 0.6 to about 3.5, about 0.7 to about 3.4, about 0.8 to about 3.3, about 0.9 to about 3.2, about 1 to about 3.1, about 1.1 to about 3, about 1.2 to about 2.9, about 1.3 to about 2.8, about 1.4 to about 2.7, about 1.5 to about 2.6, about 1.6 to about 2.5, about 1.7 to about 2.4, about 1.8 to about 2.3, about 1.9 to about 2.2, or about 2 to about 2.1, weight percent based on a total weight of the coating composition. In various non-limiting embodiments, all values and ranges of values, both whole and fractional, including and between the aforementioned values, are hereby expressly contemplated for use herein.

In one embodiment, the at least one polyurea crystal sag control agent may be described as opaque and may be as described in US4311622. In one embodiment, the at least one polyurea crystal sag control agent is an anisotropic colloidal polyurea crystal, e.g. that is the reaction product of an organic di-isocyanate and benzylamine.

In another embodiment, the at least one polyurea crystal sag control agent may be described as transparent and may be as described in US4677028 and/or US 7656151. In one embodiment, the at least one polyurea crystal sag control agent is an anisotropic colloidal polyurea crystal that is the reaction product of an amine and an organic tri- or poly-isocyanate.

In another embodiment, the at least one polyurea crystal sag control agent may be described as strong and may be as described in us7851530. In one embodiment, the at least one polyurea crystal sag control agent is the reaction product of one or more optically active organic amines with one or more di- or poly-isocyanates (e.g. as derived from di-isocyanate containing 3-20 carbons).

In one embodiment, the isocyanate is an organic di-isocyanate, the amine is benzylamine, and the melting point is from about 120°C to about 150°C. In another embodiment, the at least one polyurea crystal sag control agent is present in an amount of from about 0.1 to about 1.75 wt% based on a total weight of the coating composition. For example, this amount may be about 0.2 to about 1.7, about 0.3 to about 1.6, about 0.4 to about 1.5, about 0.5 to about 1.4, about 0.6 to about 1.3, about 0.7 to about 1.2, about 0.8 to about 1.1, or about 0.9 to about 1, wt% based on a total weight of the coating composition. In various non-limiting embodiments, all values and ranges of values, both whole and fractional, including and between the aforementioned values, are hereby expressly contemplated for use herein.

In other embodiments, the organic di-isocyanate is hexamethylene diisocyanate. In another embodiment, the isocyanate is an organic tri-isocyanate and/or an organic poly-isocyanate and the melting point is from about 50°C to about 100°C. In other embodiments, the at least one polyurea crystal sag control agent is present in an amount of from about 0.1 to about 2.5 wt% based on a total weight of the coating composition. For example, this amount may be about 0.2 to about 2.4, about 0.3 to about 2.3, about 0.4 to about 2.2, about 0.5 to about 2.1, about 0.6 to about 2, about 0.7 to about 1.9, about 0.8 to about 1.8, about 0.9 to about 1.7, about 1 to about 1.6, about 1.1 to about 1.5, about 1.2 to about 1.4, or about 1.3 to about 1.4, wt% based on a total weight of the coating composition. In various non-limiting embodiments, all values and ranges of values, both whole and fractional, including and between the aforementioned values, are hereby expressly contemplated for use herein.

In other embodiments, the isocyanate is an organic di-isocyanate, tri-isocyanate, and/or poly-isocyanate, the amine is optically active, and the melting point is from about 50°C to about 120°C. The terminology optically active is known by those of skill in the art as describing a chiral amine, e.g. an R or an S enantiomer of a chiral amine and not a mixture of R and S enantiomers of the chiral amine. In one embodiment, the at least one polyurea crystal sag control agent is present in an amount of from about 0.1 to about 2 wt% based on a total weight of the coating composition. This amount may be, for example, from about 0.2 to about 1.9, about 0.3 to about 1.8, about 0.4 to about 1.7, about 0.5 to about 1.6, about 0.6 to about 1.5, about 0.7 to about 1.4, about 0.8 to about 1.3, about 0.9 to about 1.2, or about 1 to about 1.1, wt% based on a total weight of the coating composition. In various non-limiting embodiments, all values and ranges of values, both whole and fractional, including and between the aforementioned values, are hereby expressly contemplated for use herein.

In one embodiment, the reactants are as follows:

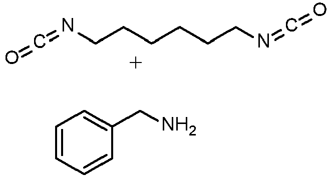

In another embodiment, the reactants are as follows:

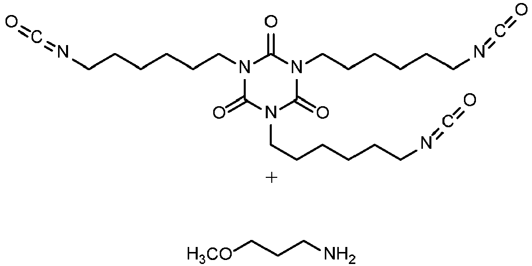

In another embodiment, the reactants are as follows:

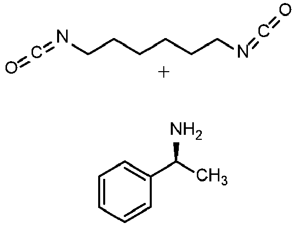

### Additional Optional Components:

The coating composition includes various components, such as binders, dyes, rheology modifiers, carriers, catalysts, conventional additives, or combinations thereof. Conventional additives may include, but are not limited to, dispersants, antioxidants, UV stabilizers and absorbers, surfactants, wetting agents, leveling agents, antifoaming agents, anti-cratering agents, or combinations thereof. In embodiments, the coating composition is suitable for application to the substrate utilizing the high transfer efficiency applicator on the basis that the coating composition includes certain components and/or includes certain components in a specific amount/ratio.

In various embodiments, the coating composition may further include dyes. Non-limiting examples of suitable dyes include triphenylmethane dyes, anthraquinone dyes, xanthene and related dyes, azo dyes, reactive dyes, phthalocyanine compounds, quinacridone compounds, and fluorescent brighteners, and combinations thereof. The coating composition may include the dye in an amount of from about 0.01 to about 5, alternatively from about 0.05 to about 1, or alternatively from about 0.05 to about 0.5, wt.%, based on a total weight of the coating composition. In certain embodiments, the coating composition includes a 10% black dye solution, such as Sol. Orasol Negro RL. In various non-limiting embodiments, all values and ranges of values, both whole and fractional, including and between the aforementioned values, are hereby expressly contemplated for use herein.

The term "binder" refers to film forming constituents of the coating composition. Typically, a binder can include polymers, oligomers, or a combination thereof that are essential for forming a coating having desired properties, such as hardness, protection, adhesion, and others. Additional components, such as carriers, pigments, catalysts, rheology modifiers, antioxidants, UV stabilizers and absorbers, leveling agents, antifoaming agents, anti-cratering agents, or other conventional additives may not be included in the term "binder" unless any of these additional components are film forming constituents of the coating composition. One or more of those additional components can be included in the coating composition. In certain embodiments, the binder includes polymers. The coating composition may include the binder in an amount of from about 5 to about 70 wt.%, alternatively from about 10 to about 50 wt.%, or alternatively from about 15 to about 25 wt.%, based on a total weight of the coating composition. In various non-limiting embodiments, all values and ranges of values, both whole and fractional, including and between the aforementioned values, are hereby expressly contemplated for use herein.

As also introduced above, the coating composition may further include a catalyst. The coating composition may further include a catalyst to reduce curing time and to allow curing of the coating composition at ambient temperatures. The ambient temperatures are typically referred to as temperatures in a range of from about 18 °C to about 35 °C. Non-limiting examples of suitable catalysts may include organic metal salts, such as, dibutyl tin dilaurate, dibutyl tin diacetate, dibutyl tin dichloride, dibutyl tin dibromide, zinc naphthenate; triphenyl boron, tetraisopropyl titanate, triethanolamine titanate chelate, dibutyl tin dioxide, dibutyl tin dioctoate, tin octoate, aluminum titanate, aluminum chelates, zirconium chelate, hydrocarbon phosphonium halides, such as, ethyl triphenyl phosphonium iodide and other such phosphonium salts and other catalysts, or a combination thereof. Non-limiting examples of suitable acid catalysts may include carboxylic acids, sulfonic acids, phosphoric acids or a combination thereof. In some embodiments, the acid catalyst can include, for example, acetic acid, formic acid, dodecyl benzene sulfonic acid, dinonyl naphthalene sulfonic acid, para-toluene sulfonic acid, phosphoric acid, or a combination thereof. The coating composition may include the catalysts in an amount of from about 0.01 to about 5, alternatively from about 0.05 to about 1, or alternatively from about 0.05 to about 0.5, wt.%, based on a total weight of the coating composition. In various non-limiting embodiments, all values and ranges of values, both whole and fractional, including and between the aforementioned values, are hereby expressly contemplated for use herein.

As also introduced above, the coating composition may further include conventional additives. The coating composition may further include an ultraviolet light stabilizer. Non-limiting examples of such ultraviolet light stabilizers include ultraviolet light absorbers, screeners, quenchers, and hindered amine light stabilizers. An antioxidant can also be added to the coating composition. Typical ultraviolet light stabilizers can include benzophenones, triazoles, triazines, benzoates, hindered amines and mixtures thereof. A blend of hindered amine light stabilizers, such as Tinuvin^{®} 328 and Tinuvin^{®}123, all commercially available from Ciba Specialty Chemicals of Tarrytown, New York, under the trade name Tinuvin^{®}, can be utilized.

Non-limiting examples of suitable ultraviolet light absorbers include hydroxyphenyl benzotriazoles, such as, 2-(2-hydroxy-5-methylphenyl)-2H-benzotrazole, 2-(2-hydroxy-3,5-di-tert.amyl-phenyl)-2H-benzotriazole, 2[2-hydroxy-3,5-di(1,1-dimethylbenzyl)phenyl]-2H-benzotriazole, reaction product of 2-(2-hydroxy-3-tert.butyl-5-methyl propionate)-2H-benzotriazole and polyethylene ether glycol having a weight average molecular weight of 300, 2-(2-hydroxy-3-tert.butyl-5-iso-octyl propionate)-2H-benzotriazole; hydroxyphenyl s-triazines, such as, 2-[4((2,-hydroxy-3-dodecyloxy/tridecyloxypropyl)-oxy)-2-hydroxyphenyl]-4,6-bis(2,4-dimethylphenyl)-1,3,5-triazine, 2-[4(2-hydroxy-3-(2-ethylhexyl)-oxy)-2-hydroxyphenyl]-4,6-bis(2,4-dimethylphenyl)1,3,5-triazine, 2-(4-octyloxy-2-hydroxyphenyl)-4,6-bis(2,4-dimethylphenyl)-1,3,5-triazine; hydroxybenzophenone U.V. absorbers, such as, 2,4-dihydroxybenzophenone, 2-hydroxy-4-octyloxybenzophenone, and 2-hydroxy-4-dodecyloxybenzophenone.

Non-limiting examples of suitable hindered amine light stabilizers include N-(1,2,2,6,6-pentamethyl-4-piperidinyl)-2-dodecyl succinimide, N(1acetyl-2,2,6,6-tetramethyl-4-piperidinyl)-2-dodecyl succinimide, N-(2hydroxyethyl)-2,6,6,6-tetramethylpiperidine-4-ol-succinic acid copolymer, 1,3,5 triazine-2,4,6-triamine, N,N"'-[1,2-ethanediybis[[[4,6-bis[butyl(1,2,2,6,6-pentamethyl-4-piperidinyl)amino]-1,3,5-triazine-2-yl]imino]-3,1-propanediyl]]bis[N, N‴-dibutyl-N',N"'-bis(1,2,2,6,6-pentamethyl-4-piperidinyl)], poly-[[6-[1,1,3,3-tetramethylbutyl)-amino]-1,3,5-trianzine-2,4-diyl][2,2,6,6-tetramethylpiperidinyl)-imino]-1,6-hexane-diyl[(2,2,6,6-tetramethyl-4-piperidinyl)-imino]), bis(2,2,6,6-tetramethyl-4-piperidinyl)sebacate, bis(1,2,2,6,6-pentamethyl-4-piperidinyl)sebacate, bis(1-octyloxy-2,2,6,6-tetramethyl-4-piperidinyl)sebacate, bis(1,2,2,6,6-pentamethyl-4-piperidinyl)[3,5bis(1,1-dimethylethyl-4-hydroxyphenyl)methyl]butyl propanedioate, 8-acetyl-3-dodecyl-7,7,9,9,-tetramethyl-1,3,8-triazaspiro(4,5)decane-2,4-dione, and dodecyl/tetradecyl-3-(2,2,4,4-tetramethyl-2l-oxo-7-oxa-3,20-diazal dispiro(5.1.11.2)henicosan-20-yl)propionate.

Non-limiting examples of suitable antioxidants include tetrakis[methylene(3,5-di-tert-butylhydroxy hydrocinnamate)]methane, octadecyl 3,5-di-tert-butyl-4-hydroxyhydrocinnamate, tris(2,4-di-tert-butylphenyl) phosphite, 1,3,5-tris(3,5-di-tert-butyl-4-hydroxybenzyl)-1,3,5-triazine-2,4,6(1H,3H,5H)-trione and benzenepropanoic acid, 3,5-bis(1,1-dimethyl-ethyl)-4-hydroxy-C7-C9 branched alkyl esters. In certain embodiments, the antioxidant includes hydroperoxide decomposers, such as Sanko^{®} HCA ( 9,10-dihydro-9-oxa-10-phosphenanthrene-10-oxide), triphenyl phosphate and other organo-phosphorous compounds, such as, Irgafos^{®} TNPP from Ciba Specialty Chemicals, Irgafos^{®} 168 from Ciba Specialty Chemicals, Ultranox^{®} 626 from GE Specialty Chemicals, Mark PEP-6 from Asahi Denka, Mark HP-10 from Asahi Denka, Irgafos^{®} P-EPQ from Ciba Specialty Chemicals, Ethanox 398 from Albemarle, Weston 618 from GE Specialty Chemicals, Irgafos^{®} 12 from Ciba Specialty Chemicals, Irgafos^{®} 38 from Ciba Specialty Chemicals, Ultranox^{®} 641 from GE Specialty Chemicals, and Doverphos^{®} S-9228 from Dover Chemicals.

The coating compositions may further include other additives known in the art for use in coating compositions. Non-limiting examples of such additives can include wetting agents, leveling and flow control agents, for example, Resiflow^{®} S (polybutylacrylate), BYK^{®} 320 and 325 (high molecular weight polyacrylates), BYK^{®} 347 (polyether-modified siloxane) under respective trade names, leveling agents based on (meth)acrylic homopolymers; rheological control agents; thickeners, such as partially crosslinked polycarboxylic acid or polyurethanes; and antifoaming agents. The other additives can be used in conventional amounts familiar to those skilled in the art. In embodiments, the wetting agents, leveling agents, flow control agents, and surfactants of the coating composition can affect the surface tension of the coating composition and thus may have an impact on the suitability of the coating composition for printing. Certain wetting agents, leveling agents, flow control agents, and surfactants may be incorporated into the coating composition for increasing or decreasing the surface tension of the coating composition.

The coating composition may have a solids content of from about 5 to about 90, alternatively from 5 to about 80, or alternatively about 15 to about 70, wt. %. The solids content may be determined in accordance with ASTM D2369-10. In certain embodiments, the higher solids content for the coating composition may be desired due to the coating composition not undergoing atomization utilizing conventional spray equipment. In various non-limiting embodiments, all values and ranges of values, both whole and fractional, including and between the aforementioned values, are hereby expressly contemplated for use herein.

The coating composition may be substantially free of a dye. The term "substantially" as utilized herein means that the coating composition may include insignificant amounts of dye such that the color and/or properties of the coating composition are not impacted by the addition of the insignificant amount of the dye which still being considered substantially free of a dye. In embodiments, the coating composition being substantially free of a dye includes no greater than 5 wt.%, alternatively no greater than 1 wt.%, or alternatively no greater than 0.1 wt.%. In various embodiments, the composition is free of a clay and silica. The terminology "free of" may describe that the composition includes less than 10, 9, 8, 7, 6, 5, 4, 3, 2, 1, 0.5, or 0.1, weight percent of the clay and/or silica based on a total weight of the composition. Alternatively, the composition may be completely free of the clay or silica. The clay is not particularly limited and may be clay particles surface functionalized with quaternary amines. Similarly, the silica is not particularly limited and may be organophilic phyllosilicates, amorphous silica such as CAS:92797-60-9, AEROSII, R-805 VV90, and combinations thereof.

In various embodiments, the method further includes the step of curing the coating composition on the substrate, wherein the high transfer efficiency applicator comprises a plurality of nozzles, wherein the step of applying is further defined as applying the coating composition through the nozzles in a plurality of lines on the substrate, and wherein the coating composition is free of visual appearance defects due to incomplete flow and leveling from individual nozzle lines after the step of curing.

In other embodiments, the method further includes the step of curing the coating composition on the substrate, wherein the high transfer efficiency applicator comprises a plurality of nozzles, wherein the step of applying is further defined as applying the coating composition through the nozzles in a plurality of lines on the substrate in a direction (X) along the substrate wherein each line partially overlaps with an adjacent line to form an overlap region and a non-overlap region, wherein the overlap region is visually smooth such that there is less than an about 1 micron variation in thickness of the overlap region as compared to the thickness of the non-overlap region measured after the step of curing over a 5mm distance measured perpendicularly to the direction (X).

In various embodiments, the high transfer efficiency applicator comprises a nozzle having a diameter and the step of applying the coating composition to the substrate through the high transfer efficiency applicator results in minimized nozzle clogging, wherein the coating composition is free of any component that has an average particle size greater than about 10% of the nozzle diameter. The nozzle and nozzle diameter may be any as described in this disclosure or known in the art.

In one embodiment,
A. the resin is an OH functional acrylic resin having a Mw of 5500 and hydroxy content of 97 mgKOH/g;
B. the melamine cross-linker comprises a methylated, iso-butylated melamine formaldehyde resin; and a methylated, iminio type (triether) melamine formaldehyde resin;
C. the optional pigment is a 20% carbon black dispersion ;
D. the organic solvent is an aromatic hydrocarbon naphthalene depleted solvent; and
E. the at least one polyurea crystal sag control agent is the reaction product of the amine and the isocyanate, wherein the isocyanate is an organic di-isocyanate, tri-isocyanate, and/or poly-isocyanate and the amine is optically active, and wherein the agent has melting point is from about 50°C to about 120°C; and
wherein the coating composition further comprises a hydroxylated acrylic polyol with a 4.5% modified hydroxy content.

In another embodiment,
A. the resin is an OH functional branched acrylic resin having a Mw of 34,500 and a hydroxy content of 54 mgKOH/g;
B. the melamine cross-linker comprises a methylated, iso-butylated melamine formaldehyde resin; and a methylated, iminio type (Triether) melamine formaldehyde resin;
C. the optional pigment is a 20% Carbon black dispersion;
D. the organic solvent is an aromatic hydrocarbon naphthalene depleted solvent; and
E. the at least one polyurea crystal sag control agent is the reaction product of the amine and the isocyanate, wherein the isocyanate is an organic di-isocyanate and the amine is benzylamine, and wherein the agent has melting point is from about 120°C to about 150°C; and
wherein the coating composition further comprises a hydroxylated acrylic polyol with a 4.5% modified hydroxy content.

### Evaluation of Sag:

In various embodiments, the coating composition has a wet film thickness of at least about 30 microns measured at about 45 degrees without visible sag. For example, this wet film thickness may be from about 30 micron to about 150 micron, or about 40 to about 120, microns measured at about 45 degrees without visible sag. In other embodiments, the wet film thickness may be about 35 to about 145, about 40 to about 140, about 45 to about 135, about 40 to about 130, about 45 to about 125, about 50 to about 120, about 55 to about 115, about 60 to about 110, about 65 to about 105, about 70 to about 100, about 75 to about 95, about 80 to about 90, or about 85 to about 90, microns. In various non-limiting embodiments, all values and ranges of values, both whole and fractional, including and between the aforementioned values, are hereby expressly contemplated for use herein.

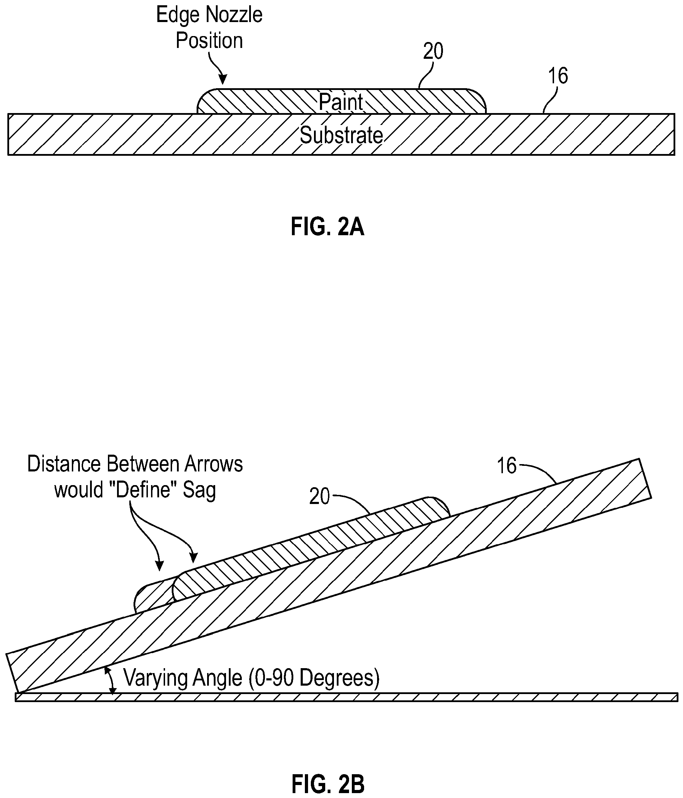

To evaluate sag, the following procedure is typically employed:
A substrate panel is oriented horizontally prior to coating application;
A high transfer efficiency applicator is used to apply 3 successive stripes of the coating composition to the horizontal substrate panel such that the composition will overlap to provide a continuous coated surface with a target wet film thickness (typically 30 microns or greater) and a coated substrate width of about 150 mm;
After application of the composition, the panel is tilted so that the approximately 150 mm coated substrate width is at an angle of about 20 to about 45 degrees from horizontal, e.g. as shown in FIG. 2B;
After about 10 minutes at room temperature, with the panel angle maintained the same, the panel is baked at about 140°C for about 30 minutes;
Sag, if present, is evidenced by drips at the bottom edge of the coating, and is evaluated visually, e.g. as shown in FIGS. 4A, 4B and 5;
If present, nozzle line visibility will be observed as a fine lines parallel to each other as well as the application direction and having a spacing the same as the adjacent nozzles in the applicator (~ 1 mm), e.g. as shown in FIGS. 3;
If present, stripe overlap visibility will be assessed visually in the region where coating is applied in sequential application passes. It is found that as little as 1 micron thickness variation over a 5 mm distance parallel to the direction of application will result in stripe overlap visibility, e.g. as shown in FIGS. 3-4.

The use of the instant coating composition may reduce or eliminate nozzle clogging. For example, high transfer efficiency "stream on demand" or "drop on demand" applicators generally include an array of fine diameter nozzles that each has a nozzle diameter of about 20 microns to 200 microns. It is typically expected for reliable fluid jetting that the particle size of any ingredient of the coating composition must be no bigger than about 10% of the nozzle diameter. While some ingredients of the coating composition may have an average size that meets this criteria, if there is a small content of oversized particles, over time, nozzle clogging will occur. The consequence is either a partially clogged nozzle which may result in misdirected drops or streams, or a completely clogged nozzle which will prevent fluid ejection. In either case, this will result in a coating defect. Clogging can be evaluated in two manners: (1) plugging of a filter installed prior to the applicator and (2) missing lines during coating application followed by microscope verification of debris in nozzle.

While well known coating appearance attributes including gloss, distinctness of image and orange peel can be quantified by various instruments, this is not the case for nozzle line and stripe overlap visibility. Coatings applied with a high transfer efficiency applicator may have high gloss, high distinctness of image, no orange peel, but still have visible nozzle line and stripe overlap defects. As shown schematically in Fig 3C, item 20 represents a line of paint deposited from a single nozzle parallel to the direction of application. While lines may be visible immediately after application, if sufficient flow and leveling does not occur, after coating cure, they may still be visible thereby non-uniform and generally undesirable coating appearance. Typically, nozzle line visibility gives a striated appearance with a distance between visible lines having the same spacing as the nozzles on the applicator. The stripe overlap defect is also parallel to the direction of application, however, the defect is not associated with applicator nozzle spacing. It is only present where application of adjacent stripes applied sequentially next to each other overlap and is visible over a length scale of 5-10 mm perpendicular to the application direction While it is typically assessed by comparison with a printed control coating with low viscosity and no rheology control agent, Fig 4A using surface profile measurements, demonstrate that the defect is visible when the difference in height of high regions vs low regions is greater than 1-2 microns.

### EXAMPLES

A series of sag control agents and coating compositions are made and evaluated as described below. After formation, each of the compositions is also evaluated to determine various physical properties, as also set forth below.

### Synthesis of Various Sag Control Agents:

### Example 1: TSCA-1

At room temperature, 80.7 parts resin solution (Polyhydroxy acrylic resin, Mw~7000 in aromatic 100 solvent) and 0.9 parts 3-methoxypropylamine and 12 parts butyl acetate were introduced into a reactor. With vigorous stirring 1.9 parts an aliphatic polyisocyanate (Desmodur N 3600) dissolved in 4.5 parts butyl acetate were added. Stirring was continued for 15 minutes and an additional 10 minutes at lower speed. This reaction system is generally represented as follows: 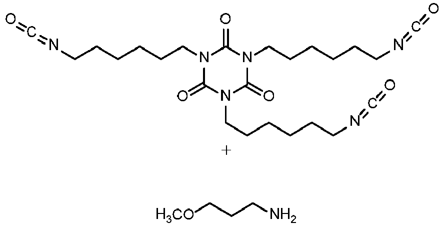 whereas the differences in TSCA-1 and TSCA-2 are in the triisocyanates relative to the distribution of the aliphatic chain lengths (reflected in the ingredient molecular weight in table below) for the isocyanate. The listed melting points are from product literature so we didn't actually measure the melting points for our examples

### Example 2: TSCA-2

At room temperature, 80.7 parts Resin solution Polyhydroxy acrylic resin, Mw~7000 in aromatic 100 solvent) and 0.8 parts 3-methoxypropylamine and 12 parts butyl acetate were introduced into a reactor. With vigorous stirring 2 parts an aliphatic polyisocyanate (Desmodur N 3390) dissolved in 4.5 parts butyl acetate were added. Stirring was continued for 15 minutes and an additional 10 minutes at lower speed.

| **Ingredient** | **TSCA-1** | **TSCA-2** |
|---|---|---|
| Polyhydroxy acrylic resin, Mw∼7000 in aromatic 100 solvent | 80.7% | 80.7% |
| Butyl acetate | 16.5% | 16.5% |
| 3-methoxypropylamine | 0.91% | 0.81% |
| Desmodur N 3600 | 1.90% | - |
| Desmodur N 3390 | - | 2.00% |

| Aliphatic polyisocyanate (hexamethylene diisocyanate trimer) | Equivalent Weight | Viscosity (mPa-s at 23C) |
|---|---|---|
| Desmodur N 3600 | 183 | 1200 |
| Desmodur N 3390 | 214 | 450 |

### Synthesis of Various Coating Compositions:

### Example 3:

A coating composition is prepared using the materials described immediately below. After formation, the coating composition is evaluated to determine viscosity, nozzle clogging, sag, nozzle line visibility, and overlap visibility.

| **Material** | **Wt%** | **Chemical Description** |
|---|---|---|
| Strong SCA containing acrylic resin: Setalux 61767 VX-60 (59% Acrylic/1.7% SCA) | 40.4 | 1.7% SCA in acrylic polyol with 4,5% hydroxy content modified with a strong SCA (59% solid), 34% aromatic hydrocarbon / density 1,0300 g/L @25°C; boiling point 35°C, 6% Xylene, 1,5% Ethylbenzene |
| Melamine Formaldehyde Resin: Cymel 1168 | 12.5 | methylated, iso- butylated, with high degree of alkylation (hexaether) melamine formaldehyde resin |
| Hydroxyl functional acrylic resin (Mw∼5500); 75% Solids in 90% aromatic hydrocarbon solvent | 3.2 | OH functional, (97mgKOH /g) acrylic resin; Mw 5500, Mn 2200, 75% solid in 90% aromatic hydrocarbon / density 1,0300 g/L @25°C; boiling point 35°C |
| Acid catalyst - Nacure XP-221 | 1.0 | aromatic sulfonic acid reaction initiator for amino formaldehyde crosslinker (melamine) 50% in 11% 2-amino-2-methl-1propanol and 39% Isobutyl alcohol = 0,5% Nacure XP-221 |
| Melamine-Formaldehyde Resin: Resimene 717 | 2.9 | methylated, iminiotype (Triether) melamine formaldehyde resin |
| Bis(1,2,2,6,6-Pentamethyl-4-Piperdinyl) Se: Tinuvin 292 | 0.2 | Bis(1,2,2,6,6-Penramethyl-4-Piperidinyl)sebacate (C30H56N204) |
| Ultraviolet Absorber: Tinuvin 1130 | 0.3 | Hydroxyphenyl benzotriazole class |
| Aromatic Hydrocarbon: Hydrosol A200 Nd | 15.4 | aromatic hydrocarbon naphthalene depleted boiling point 160-220°C, density 0,8900 g/L @20°C |
| Black pigment dispersion - 20% pigment solids | 3.2 | 20% carbon black dispersion 30% Butyl acetate and 5,6% Trimethylorthoacetate; 43% acrylic dispersant |
| Dow Corning - 57 (silicone glycol copolymer surfactant), 10% in aromatic hydrocarbon | 0.04 | 10% non reactive Polysiloxane (Dow coming-57) in 89% aromatic hydrocarbon / density 1,0300 g/L @25°C; boiling point 35°C, 1% Butylacetate |
| Aromatic Hydrocarbon: (160-220C BP range) | 20.9 | aromatic hydrocarbon naphthalene depleted boiling point 160-220°C, density 0,8900 g/L @20°C |
| Total | 100 | |
| Viscosity @ 1000s-1 Cap 2000 | 40-50 mPas | |
| Nozzle Clogging | + | |
| Sag | + | |
| Nozzle Line Visibility | ++ | |
| Overlap Visibility | - | |

Throughout these Examples, both above and below, each "+" is a positive indicator indicating subjectively better performance as understood and evaluated by one of skill in the art. Each "-" is a negative indicator indicating subjectively poorer performance as understood and evaluated by one of skill in the art. If more than one "+" or "-" sign is used, this means even better, or poorer, performance, respectively, as understood and evaluated by one of skill in the art.

Viscosity was evaluated using ASTM 2196.

Moreover, nozzle clogging, sag, nozzle line visibility, and overlap visibility are evaluated using methods described above.

### Example 4:

An additional coating composition is prepared using the materials described immediately below. After formation, the coating composition is evaluated to determine viscosity, nozzle clogging, sag, nozzle line visibility, and overlap visibility.

| **Material** | **Wt%** | **Chemical Description** |
|---|---|---|
| Hydroxylated acrylic resin, modified with Opaque sag control agent (SCA). 59.5% acrylic resin, 3.3% SCA crystals, 37.2%aromatic hydrocarbon (bp range: 160-220C) | 21.798 | hydroxylated acrylic modified with SCA, 59,5% solid in aromatic hydrocarbon naphthalene depleted boiling point 160-220°C, density 0,8900 g/L @20°C, aromatic hydrocarbon / density 1,0300 g/L @25°C; boiling point 35°C / |
| Hydroxy functional acrylic resin, Mw∼34,500, 65% solids in 90% aromatic hydrocarbon | 22.272 | OH functional branched acrylic resin; Mw 34500, Mn 3700, 54mg KOH/g, 65% solid in 90% aromatic hydrocarbon / density 1,0300 g/L @25°C; boiling point 35°C |
| Melamine Formaldehyde Resin: Cymel 1168 | 13.079 | methylated, isobutylated, with high degree of alkylation (hexaether) melamine formaldehyde resin |
| Acid catalyst - Nacure XP-221 | 1.056 | aromatic sulfonic acid reaction initiator for amino formaldehyde crosslinker (melamine) 50% in 11% 2-amino-2-methl-1propanol and 39% Isobutyl alcohol = 0,5% Nacure XP-221 |
| Melamine-Formaldehyde Resin: Resimene 717 | 3.033 | methylated, iminiotype (Triether) melamine formaldehyde resin |
| Bis(1,2,2,6,6-Pentamethyl-4-Piperdinyl) Se: Tinuvin 292 | 0.199 | Bis(1,2,2,6,6-Penramethyl-4-Piperidinyl)sebacate (C30H56N204) |
| Ultraviolet Absorber: Tinuvin 1130 | 0.265 | Hydroxyphenyl benzotriazole class * see attachment |
| Aromatic Hydrocarbon: Hydrosol A200 Nd | 16.112 | aromatic hydrocarbon naphthalene depleted boiling point 160-220°C, density 0,8900 g/L @20°C |
| Black pigment dispersion - 20% pigment solids | 3.378 | 20% carbon black dispersion 30% Butyl acetate and 5,6% Trimethylortoacetat; 43% acrylic dispersant |
| Dow Corning - 57 (silicone glycol copolymer surfactant), 10% in aromatic hydrocarbon | 0.043 | 10% non reactive Polysiloxane (Dow corning-57) in 89% aromatic hydrocarbon / density 1,0300 g/L @25°C; boiling point 35°C, 1% Butylacetate |
| Aromatic Hydrocarbon: Hydrosol A200 ND | 18.765 | aromatic hydrocarbon naphthalene depleted boiling point 160-220°C, density 0,8900 g/L @20°C |
| | 100 | |
| Viscosity @ 1000s-1 Cap 2000 | 40-50 mPas | |
| Nozzle Clogging | -- | |
| Sag | - | |
| Nozzle Line Visibility | - | |
| Overlap Visibility | -- | |

Viscosity was evaluated using ASTM D2196.

Moreover, nozzle clogging, sag, nozzle line visibility, and overlap visibility are evaluated using methods described above.

### Examples 5-11

Additional coating compositions are prepared using the materials described immediately below. After formation, the coating composition is evaluated to determine nozzle clogging, sag, nozzle line visibility, and overlap visibility.

| **Material** | **Ex. 5** | **Ex. 6** | **Ex. 7** | **Ex. 8** | **Ex. 9** | **Ex. 10** | **Ex. 11** |
|---|---|---|---|---|---|---|---|
| Melamine Formaldehyde Resin | 21.999 | 22.161 | 22.749 | 21.43 | 22.92 | 18.37 | 18.37 |
| Butyl Acetate | 0 | 0 | 0 | 0 | 0 | 27.73 | 27.73 |
| Acetone | 10.446 | 10.522 | 10.802 | 10.176 | 10.883 | 0 | 0 |
| Polyhydroxy acrylic resin, Mw∼7000 in aromatic 100 solvent | 33.196 | 51.598 | 40.617 | 52.179 | 59.71 | 0.18 | 0.18 |
| SCA crystal 5% Branched polyester resin Mw∼10000 Tg∼-30 138 mgKOH/g 62% in butyl acetate | 18.755 | 0 | 19.394 | 0 | 0 | 0 | 0 |
| 10% Dowasil 57 in aromatic 100 | 0.064 | 0.064 | 0.066 | 0.062 | 0.067 | 0.05 | 0.05 |
| DDBSA/AMP Solution | 1.533 | 1.544 | 1.584 | 1.493 | 1.597 | 1.28 | 1.28 |
| 9% Amorphous silica 25.2% RC-3745 20% N-Butyl alcohol 45.8% Aromatic Hydrocarbon (solvesso 100) | 0 | 0 | 0 | 10.149 | 0 | 0 | 0 |
| 18% carbon black dispersion 18% acrylic resin in solvent | 4.63 | 4.663 | 4.788 | 4.511 | 4.823 | 3.86 | 3.86 |
| 10% Garamite^{®} Dispersion | 9.378 | 9.447 | 0 | 0 | 0 | 0 | 0 |
| TSCA-1 | 0 | 0 | 0 | 0 | 0 | 0 | 48.53 |
| TSCA-2 | 0 | 0 | 0 | 0 | 0 | 48.53 | 0 |
| Nozzle Clogging | ---- | ---- | + | ---- | ++++ | ++++ | ++++ |
| Sag | NA | NA | ++ | NA | ---- | +++ | +++ |
| Nozzle Line Visibility | NA | NA | ++ | NA | ++++ | - | - |
| Overlap Visibility | NA | NA | -- | NA | ++++ | ++ | + |

| | | | | | | | |
|---|---|---|---|---|---|---|---|
| * "NA" means not measurable due to severe nozzle clogging preventing coating application. | | | | | | | |

Moreover, nozzle clogging, sag, nozzle line visibility, and overlap visibility are evaluated using methods described above.

Relative to the above, the materials are as follows:

| **Material** | **Chemical Description** |
|---|---|
| Melamine Formaldehyde Resin | Methylated, isobutylated, with high degree of alkylation (hexaether) melamine formaldehyde resin |
| Butyl Acetate | Butyl Acetate |
| Acetone | Acetone |
| High Solids Enamel Resin | Low Tg(< 20C) hydroxy functional acrylic resin Mw=7000 |
| Opaque SCA In resin solution | 5% SCA crystal, 80% branched hydroxy functional (138 mg KOH/g) polyester resin Mw∼10000 Tg∼-30 in n-butyl acetate |
| 10% Dowasil 57 in aromatic 100 | 10% Dowasil 57 in aromatic 100 |
| DDBSA/AMP Solution | 48% aromatic sulfonic acid in 10% amino methyl propanol in N-Butyl alcohol |
| Silica/Acrylic Dispersion | 9% Amorphous silica 25.2% Low Tg(< 20C) hydroxy functional acrylic resin Mw=700020% N-Butyl alcohol 45.8% Aromatic Hydrocarbon (Solvesso 100) |
| 18% Carbon black dispersion | 63.3% solvent 18 carbon black 18 acrylic dispersant |
| 10% Garamite Dispersion | 10% clay with 48% acrylic resin dispersant 32% solvent |
| Example 1 Above | Example 1 Above |
| Example 2 Above | Example 2 Above |

Examples 5, 6 and 8 demonstrate that classes of rheology control agents typically used for spray atomization to provide the desired balance of sag, flow and leveling cannot be used for the types of high transfer applicators discussed here due to severe nozzle clogging. For example, it may be that particles or their agglomerates in the coating formulation are sufficiently large in size that they cannot pass through the small nozzles of the high transfer efficiency applicator. Examples 3, 7, 10 and 11 contain different types of sag control agents for which nozzle clogging was either very good (none observed) or only a very small amount that could be acceptable. These examples also exhibit substantial improvement in sag vs. the control, example 9 (no rheology control agent), while providing differing levels of benefit for nozzle line and stripe overlap visibility. Since specific requirements for coating application on an automotive body will require different levels of sag resistance, these examples indicate potential for adjusting SCA type and level options to meet total appearance performance (flow and leveling balance against sag). Example 4 contained another SCA which did exhibit severe clogging.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. A method of applying a one-component solvent-borne coating composition to a substrate utilizing a high transfer efficiency applicator to form a coating layer disposed on the substrate, said method comprising the steps of:
providing the coating composition to the high transfer efficiency applicator; and
applying the coating composition to the substrate through the high transfer efficiency applicator to form the coating layer on the substrate wherein a loss of volatiles after application through the high transfer efficiency applicator is less than about 0.5 weight percent based on a total weight of the coating composition,
wherein the coating composition comprises:
F. a resin comprising an acrylic, a polyester, or combinations thereof;
G. a melamine cross-linker;
H. an optional pigment;
I. an organic solvent; and
J. at least one polyurea crystal sag control agent that is the reaction product of an amine and an isocyanate, that has a melting point of from about 50°C to about 150°C, and that is present in an amount of from about 0.1 to about 4 weight percent based on a total weight of the coating composition; and
wherein the coating composition has a wet film thickness of at least about 30 microns measured at about 45 degrees without visible sag.

2. The method of claim 1 wherein the isocyanate is an organic di-isocyanate, the amine is benzylamine, and the melting point is from about 120°C to about 150°C.

3. The method of claim 1 or 2 wherein the at least one polyurea crystal sag control agent is present in an amount of from about 0.1 to about 1.75 wt% based on a total weight of the coating composition.

4. The method of claim 2 or 3 wherein the organic di-isocyanate is hexamethylene diisocyanate.

5. The method of claim 1 wherein the isocyanate is an organic tri-isocyanate and/or an organic poly-isocyanate and the melting point is from about 50°C to about 100°C.

6. The method of claim 1 or 5 wherein the at least one polyurea crystal sag control agent is present in an amount of from about 0.1 to about 2.5 wt% based on a total weight of the coating composition.

7. The method of claim 1 wherein the isocyanate is an organic di-isocyanate, tri-isocyanate, and/or poly-isocyanate, the amine is optically active, and the melting point is from about 50°C to about 120°C.

8. The method of claim 1 or 7 wherein the at least one polyurea crystal sag control agent is present in an amount of from about 0.1 to about 2 wt% based on a total weight of the coating composition.

9. The method of any one of claims 1 to 8 wherein the composition is free of a clay and silica.

10. The method of any one of claims 1 to 9 further comprising the step of curing the coating composition on the substrate, wherein the high transfer efficiency applicator comprises a plurality of nozzles, wherein the step of applying is further defined as applying the coating composition through the nozzles in a plurality of lines on the substrate, and wherein the coating composition is free of visual appearance defects due to incomplete flow and leveling from individual nozzle lines after the step of curing.

11. The method of any one of claims 1 to 9 further comprising the step of curing the coating composition on the substrate, wherein the high transfer efficiency applicator comprises a plurality of nozzles, wherein the step of applying is further defined as applying the coating composition through the nozzles in a plurality of lines on the substrate in a direction (X) along the substrate wherein each line partially overlaps with an adjacent line to form an overlap region and a non-overlap region, wherein the overlap region is visually smooth such that there is less than an about 1 micron variation in thickness of the overlap region as compared to the thickness of the non-overlap region measured after the step of curing over a Smm distance measured perpendicularly to the direction (X).

12. The method of any one of claims 1 to 11 wherein the high transfer efficiency applicator comprises a nozzle having a diameter and the step of applying the coating composition to the substrate through the high transfer efficiency applicator results in minimized nozzle clogging, wherein the coating composition is free of any component that has an average particle size greater than about 10% of the nozzle diameter.

13. The method of any one of claims 1 or 8 to 12 wherein:
F. the resin is an OH functional (97 mg KOH/g) acrylic resin having a Mw of 5500;
G. the melamine cross-linker comprises
a methylated, iso-butylated melamine formaldehyde resin; and
a methylated, iminio type (triether) melamine formaldehyde resin;
H. the optional pigment is a 20% pigment paste of carbon black;
I. the organic solvent is an aromatic hydrocarbon naphthalene depleted solvent; and
J. the at least one polyurea crystal sag control agent is the reaction product of the amine and the isocyanate, wherein the isocyanate is an organic di-isocyanate, tri-isocyanate, and/or poly-isocyanate and the amine is optically active, and wherein the agent has melting point is from about 50°C to about 120°C; and
wherein the coating composition further comprises a hydroxylated acrylic polyol with a 4.5% modified hydroxy content.

14. The method of any one of claims 1 or 8 to 12 wherein:
F. the resin is an OH functional (54 mgKOH/g) branched acrylic resin having a Mw of 34,500;
G. the melamine cross-linker comprises a methylated, iso-butylated melamine formaldehyde resin; and a methylated, iminio type (Triether) melamine formaldehyde resin;
H. the optional pigment is a 20% pigment paste of carbon black;
I. the organic solvent is an aromatic hydrocarbon naphthalene depleted solvent; and
J. the at least one polyurea crystal sag control agent is the reaction product of the amine and the isocyanate, wherein the isocyanate is an organic di-isocyanate and the amine is benzylamine, and wherein the agent has melting point is from about 120°C to about 150°C; and
wherein the coating composition further comprises a hydroxylated acrylic polyol with a 4.5% modified hydroxy content.

15. A method of applying a two-component solvent-borne coating composition to a substrate utilizing a high transfer efficiency applicator to form a coating layer disposed on the substrate, said method comprising the steps of:
providing the coating composition to the high transfer efficiency applicator; and
applying the coating composition to the substrate through the high transfer efficiency applicator to form the coating layer on the substrate wherein a loss of volatiles after application through the high transfer efficiency applicator is less than about 0.5 weight percent based on a total weight of the coating composition,
wherein the coating composition comprises:
F. a hydroxyl-functional resin;
G. an isocyanate cross-linker;
H. an optional pigment;
I. an organic solvent; and
J. at least one polyurea crystal sag control agent that is the reaction product of an amine and an isocyanate, that has a melting point of from about 50°C to about 150°C, and that is present in an amount of from about 0.1 to about 4 weight percent based on a total weight of the coating composition; and
wherein the coating composition has a wet film thickness of at least about 30 microns measured at about 45 degrees without visible sag.

## Patentansprüche

1. Verfahren zum Aufbringen einer Einkomponenten-Beschichtungszusammensetzung auf Lösungsmittelbasis auf ein Substrat unter Verwendung eines Applikators mit hoher Übertragungseffizienz, um eine Beschichtungsschicht zu bilden, die auf dem Substrat geordnet ist, wobei das Verfahren die Schritte umfasst des:
Lieferns der Beschichtungszusammensetzung an den Applikator mit hoher Übertragungseffizienz; und
Aufbringen der Beschichtungszusammensetzung, auf das Substrat, durch den Applikator mit hoher Übertragungseffizienz, um die Beschichtungsschicht auf dem Substrat zu bilden, wobei einen Verlust von flüchtigen Substanzen nach dem Aufbringen durch den Applikator mit hoher Übertragungseffizienz geringer als etwa 0,5 Gewichtsprozent, auf das Gesamtgewicht der Beschichtungszusammensetzung bezogen, ist,
wobei die Beschichtungszusammensetzung Folgendes umfasst:
F. ein Harz, das ein Acryl, einen Polyester oder eine Kombination davon umfasst;
G. ein Melamin-Vernetzungsmittel;
H. ein wahlweises Pigment;
I. ein organisches Lösungsmittel; und
J. mindestens ein Polyharnstoff-Kristallabsackverhinderungsmittel, das das Reaktionsprodukt eines Amins und eines Isocyanats ist, das einen Schmelzpunkt von mehr als etwa 50 °C bis etwa 150 °C aufweist und das in einer Menge von etwa 0,1 bis etwa 4 Gewichtsprozent, auf ein Gesamtgewicht der Beschichtungszusammensetzung bezogen, vorliegt; und
wobei die Beschichtungszusammensetzung eine Nassfilmdicke von mindestens etwa 30 Mikron, bei etwa 45 Grad gemessen, ohne sichtbares Absacken aufweist.

2. Verfahren nach Anspruch 1, wobei das Isocyanat ein organisches Diisocyanat ist, das Amin Benzylamin ist und der Schmelzpunkt etwa 120 °C bis etwa 150 °C beträgt.

3. Verfahren nach Anspruch 1 oder 2, wobei das mindestens eine Polyharnstoff-Kristallabsackverhinderungsmittel in einer Menge von etwa 0,1 bis etwa 1,75 Gew.-%, auf ein Gesamtgewicht der Beschichtungszusammensetzung bezogen, vorliegt.

4. Verfahren nach Anspruch 2 oder 3, wobei das organische Diisocyanat Hexamethylendiisocyanat ist.

5. Verfahren nach Anspruch 1, wobei das Isocyanat ein organisches Triisocyanat und/oder ein organisches Polyisocyanat ist und der Schmelzpunkt etwa 50 °C bis etwa 100 °C beträgt.

6. Verfahren nach Anspruch 1 oder 5, wobei das mindestens eine Polyharnstoff-Kristallabsackverhinderungsmittel in einer Menge von etwa 0,1 bis etwa 2,5 Gew.-%, auf ein Gesamtgewicht der Beschichtungszusammensetzung bezogen, vorliegt.

7. Verfahren nach Anspruch 1, wobei das Isocyanat ein organisches Diisocyanat, Triisocyanat und/oder Polyisocyanat ist, das Armin optisch aktiv ist und der Schmelzpunkt etwa 50 °C bis etwa 120 °C beträgt.

8. Verfahren nach Anspruch 1 oder 7, wobei das mindestens eine Polyharnstoff-Kristallabsackverhinderungsmittel in einer Menge von etwa 0,1 bis etwa 2 Gew.-%, auf ein Gesamtgewicht der Beschichtungszusammensetzung bezogen, vorliegt.

9. Verfahren nach einem der Ansprüche 1 bis 8, wobei die Zusammensetzung frei von einem Ton und Siliciumdioxid ist.

10. Verfahren nach einem der Ansprüche 1 bis 9, ferner den Schritt des Aushärten der Beschichtungszusammensetzung auf dem Substrat umfassend, wobei der Applikator mit hoher Übertragungseffizienz eine Mehrzahl von Düsen umfasst, wobei der Schritt des Aufbringens ferner als Aufbringen der Beschichtungszusammensetzung durch die Düsen in einer Mehrzahl von Linien auf dem Substrat definiert ist und wobei die Beschichtungszusammensetzung frei von Erscheinungsbilddefekten durch unvollständiges Fließen und Egalisieren aus einzelnen Düsenlinien nach dem Schritt des Aushärtens ist.

11. Verfahren nach einem der Ansprüche 1 bis 9, ferner den Schritt des Aushärtens der Beschichtungszusammensetzung auf dem Substrat umfassend, wobei der Applikator mit hoher Übertragungseffizienz eine Mehrzahl von Düsen umfasst, wobei der Schritt des Aufbringens ferner als Aufbringen der Beschichtungszusammensetzung durch die Düsen in einer Mehrzahl von Linien auf dem Substrat in einer Richtung (X) dem Substrat entlang definiert ist, wobei jede Linie sich mit einer benachbarten Linie überlappt, um eine Überlappungsregion und eine Nichtüberlappungsregion zu bilden, wobei die Überlappungsregion visuell glatt ist, derart, dass weniger als eine Dickenvariation von 1 Mikron der Überlappungsregion im Vergleich mit der Dicke der Nichtüberlappungsregion, nach dem Schritt des Aushärtens gemessen, über einen Abstand von 5 mm, senkrecht zu der Richtung (X) gemessen, vorliegt.

12. Verfahren nach einem der Ansprüche 1 bis 11, wobei der Applikator mit hoher Übertragungseffizienz eine Düse umfasst, die einen Durchmesser aufweist, und der Schritt des Aufbringens der Beschichtungszusammensetzung auf das Substrat durch den Applikator mit hoher Übertragungseffizienz zu minimiertem Düsenverstopfen führt, wobei die Beschichtungszusammensetzung frei von irgendeiner Komponente ist, die eine durchschnittliche Teilchengröße von mehr als etwa 10 % des Düsendurchmessers aufweist.

13. Verfahren nach einem der Ansprüche 1 oder 8 bis 12, wobei:
F. das Harz ein OH-funktionelles (97 mg KOH/g) Acrylharz ist, das ein MW von 5500 aufweist;
G. das Melamin-Vernetzungsmittel ein methyliertes, isobutyliertes Melaminformaldehydharz und
ein methyliertes (Triether)melaminformaldehydharz vom Iminotyp umfasst;
H. das wahlweise Pigment eine 20 %-ige Rußpigmentpaste ist;
I. das organische Lösungsmittel ein an aromatischem Kohlenwasserstoffnaphthalin verarmtes Lösungsmittel ist; und
J. das mindestens eine Polyharnstoff-Kristallabsackverhinderungsmittel das Reaktionsprodukt des Amins und des Isocyanats ist, wobei das Isocyanat ein organisches Diisocyanat, Triisocyanat und/oder Polyisocyanat ist und das Armin optisch aktiv ist und wobei das Mittel den Schmelzpunkt von etwa 50 °C bis etwa 120 °C aufweist; und
wobei die Beschichtungszusammensetzung ferner ein hydroxyliertes acrylisches Polyol mit einem 4,5 %-igen Gehalt an modifiziertem Hydroxy aufweist.

14. Verfahren nach einem der Ansprüche 1 oder 8 bis 12, wobei
F. das Harz ein OH-funktionelles (54 mg KOH/g) verzweigtes Acrylharz ist, das ein MW von 34.500 aufweist;
G. das Melamin-Vernetzungsmittel ein methyliertes, isobutyliertes Melaminformaldehydharz; und
ein methyliertes (Triether)melaminformaldehydharz vom Iminotyp umfasst;
H. das wahlweise Pigment eine 20 %-ige Rußpigmentpaste ist;
I. das organische Lösungsmittel ein an aromatischem Kohlenwasserstoffnaphthalin verarmtes Lösungsmittel ist; und
J. das mindestens eine Polyharnstoff-Kristallabsackverhinderungsmittel das Reaktionsprodukt des Amins und des Isocyanats ist, wobei das Isocyanat ein organisches Diisocyanat ist und das Amin Benzylamin ist und wobei das Mittel einen Schmelzpunkt von etwa 120 °C bis etwa 150 °C aufweist und
wobei die Beschichtungszusammensetzung ferner ein hydroxyliertes acrylisches Polyol mit einem 4,5 %-igen Gehalt an modifiziertem Hydroxy aufweist.

15. Verfahren zum Aufbringen einer Zweikomponenten-Beschichtungszusammensetzung auf Lösungsmittelbasis auf ein Substrat unter Verwendung eines Applikators mit hoher Übertragungseffizienz, um eine Beschichtungsschicht zu bilden, die auf dem Substrat geordnet ist, wobei das Verfahren die Schritte umfasst des:
Lieferns der Beschichtungszusammensetzung an den Applikator mit hoher Übertragungseffizienz; und
Aufbringens der Beschichtungszusammensetzung auf das Substrat, durch den Applikator mit hoher Übertragungseffizienz, um die Beschichtungsschicht auf dem Substrat zu bilden, wobei einen Verlust von flüchtigen Substanzen nach dem Aufbringen durch den Applikator mit hoher Übertragungseffizienz geringer als etwa 0,5 Gewichtsprozent, auf das Gesamtgewicht der Beschichtungszusammensetzung bezogen, ist,
wobei die Beschichtungszusammensetzung Folgendes umfasst:
F. ein hydroxylfunktionelles Harz;
G. ein Isocyanat-Vernetzungsmittel;
H. ein wahlweises Pigment;
I. ein organisches Lösungsmittel; und
J. mindestens ein Polyharnstoff-Kristallabsackverhinderungsmittel, das das Reaktionsprodukt eines Amins und eines Isocyanats ist, das einen Schmelzpunkt von etwa 50 °C bis etwa 150 °C aufweist und das in einer Menge von etwa 0,1 bis etwa 4 Gewichtsprozent, auf ein Gesamtgewicht der Beschichtungszusammensetzung bezogen, vorliegt; und
wobei die Beschichtungszusammensetzung eine Nassfilmdicke von mindestens etwa 30 Mikron, bei etwa 45 Grad gemessen, ohne sichtbares Absacken aufweist.

## Revendications

1. Procédé d'application d'une composition de revêtement à base de solvant à un composant sur un substrat en utilisant un applicateur à haute efficacité de transfert pour former une couche de revêtement placée sur le substrat, ledit procédé comprenant les étapes de :
fourniture de la composition de revêtement sur l'applicateur à haute efficacité de transfert ; et
application de la composition de revêtement sur le substrat par le biais de l'applicateur à haute efficacité de transfert pour former la couche de revêtement sur le substrat dans lequel une perte de substances volatiles après l'application par le biais de l'applicateur à haute efficacité de transfert est inférieure à environ 0,5 pour cent en poids sur la base d'un poids total de la composition de revêtement,
dans lequel la composition de revêtement comprend :
F. une résine comprenant un acrylique, un polyester ou des combinaisons de ceux-ci ;
G. un agent de réticulation de type mélamine ;
H. un pigment facultatif ;
I. un solvant organique ; et
J. au moins un agent de contrôle de coulure de type cristaux de polyurée qui est le produit de réaction d'une amine et d'un isocyanate, qui a un point de fusion d'environ 50 °C à environ 150 °C, et qui est présent en une quantité allant d'environ 0,1 à environ 4 pour cent en poids sur la base d'un poids total de la composition de revêtement ; et
dans lequel la composition de revêtement a une épaisseur de film humide d'au moins environ 30 microns mesurée à environ 45 degrés sans coulure visible.

2. Procédé selon la revendication 1 dans lequel l'isocyanate est un diisocyanate organique, l'amine est la benzylamine et le point de fusion est d'environ 120 °C à environ 150 °C.

3. Procédé selon la revendication 1 ou 2 dans lequel l'au moins un agent de contrôle de coulure de type cristaux de polyurée est présent en une quantité d'environ 0,1 à environ 1,75 % en poids sur la base d'un poids total de la composition de revêtement.

4. Procédé selon la revendication 2 ou 3 dans lequel le diisocyanate organique est le diisocyanate d'hexaméthylène.

5. Procédé selon la revendication 1 dans lequel l'isocyanate est un triisocyanate organique et/ou un polyisocyanate organique et le point de fusion est d'environ 50 °C à environ 100 °C.

6. Procédé selon la revendication 1 ou 5 dans lequel l'au moins un agent de contrôle de coulure de type cristaux de polyurée est présent en une quantité d'environ 0,1 à environ 2,5 % en poids sur la base d'un poids total de la composition de revêtement.

7. Procédé selon la revendication 1 dans lequel l'isocyanate est un diisocyanate, un tri-isocyanate et/ou un polyisocyanate organique, l'amine est optiquement active et le point de fusion est d'environ 50 °C à environ 120 °C.

8. Procédé selon la revendication 1 ou 7 dans lequel l'au moins un agent de contrôle de coulure de type cristaux de polyurée est présent en une quantité d'environ 0,1 à environ 2 % en poids sur la base d'un poids total de la composition de revêtement.

9. Procédé selon l'une quelconque des revendications 1 à 8 dans lequel la composition est exempte d'une argile et de silice.

10. Procédé selon l'une quelconque des revendications 1 à 9 comprenant en outre l'étape de durcissement de la composition de revêtement sur le substrat, dans lequel l'applicateur à haute efficacité de transfert comprend une pluralité de buses, dans lequel l'étape d'application est en outre définie comme l'application de la composition de revêtement à travers les buses en une pluralité de lignes sur le substrat, et dans lequel la composition de revêtement est exempte de défauts d'apparence visuelle dus à un écoulement incomplet et à un nivellement à partir de lignes de buses individuelles après l'étape de durcissement.

11. Procédé selon l'une quelconque des revendications 1 à 9 comprenant en outre l'étape de durcissement de la composition de revêtement sur le substrat, dans lequel l'applicateur à haute efficacité de transfert comprend une pluralité de buses, dans lequel l'étape d'application est en outre définie comme l'application de la composition de revêtement à travers les buses en une pluralité de lignes sur le substrat dans une direction (X) le long du substrat dans lequel chaque ligne chevauche partiellement une ligne adjacente pour former une région de chevauchement et une région de non chevauchement, dans lequel la région de chevauchement est visuellement lisse de telle sorte qu'il y a une variation inférieure à environ 1 micron de l'épaisseur de la région de chevauchement par rapport à l'épaisseur de la région de non chevauchement mesurée après l'étape de durcissement sur une distance de 5 mm mesurée perpendiculairement à la direction (X).

12. Procédé selon l'une quelconque des revendications 1 à 11 dans lequel l'applicateur à haute efficacité de transfert comprend une buse ayant un diamètre et l'étape d'application de la composition de revêtement sur le substrat par le biais de l'applicateur à haute efficacité de transfert entraîne une obstruction de buse minimisée, dans lequel la composition de revêtement est exempte de tout composant ayant une taille de particule moyenne supérieure à environ 10 % du diamètre de la buse.

13. Procédé selon l'une quelconque des revendications 1 ou 8 à 12 dans lequel :
F. la résine est une résine acrylique à fonctionnalité OH (97 mg de KOH/g) ayant une Mp de 5500 ;
G. l'agent de réticulation de type mélamine comprend une résine mélamine-formaldéhyde méthylée et isobutylée ; et
une résine mélamine-formaldéhyde méthylée de type iminio (triéther) ;
H. le pigment facultatif est une pâte pigmentaire à 20 % de noir de carbone ;
I. le solvant organique est un solvant appauvri en naphtalène hydrocarboné aromatique ; et
J. l'au moins un agent de contrôle de coulure de type cristaux de polyurée est le produit de réaction de l'amine et de l'isocyanate, dans lequel l'isocyanate est un di-isocyanate, un tri-isocyanate et/ou un poly-isocyanate organique et l'amine est optiquement active, et dans lequel l'agent a un point de fusion allant d'environ 50 °C à environ 120 °C ; et
dans lequel la composition de revêtement comprend en outre un polyol acrylique hydroxylé ayant une teneur en hydroxy modifié de 4,5 %.

14. Procédé selon l'une quelconque des revendications 1 ou 8 à 12 dans lequel :
F. la résine est une résine acrylique à fonctionnalité OH (54 mg de KOH/g) ayant une Mp de 34 500 ;
G. l'agent de réticulation de type mélamine comprend une résine mélamine-formaldéhyde méthylée et isobutylée ; et
une résine mélamine-formaldéhyde méthylée de type iminio (triéther) ;
H. le pigment facultatif est une pâte pigmentaire à 20 % de noir de carbone ;
I. le solvant organique est un solvant appauvri en naphtalène hydrocarboné aromatique ; et
J. l'au moins un agent de contrôle de coulure de type cristaux de polyurée est le produit de réaction de l'amine et de l'isocyanate, dans lequel l'isocyanate est un di-isocyanate organique et l'amine est la benzylamine, et dans lequel l'agent a un point de fusion allant d'environ 120 °C à environ 150 °C ; et
dans lequel la composition de revêtement comprend en outre un polyol acrylique hydroxylé ayant une teneur en hydroxy modifié de 4,5 %.

15. Procédé d'application d'une composition de revêtement à base de solvant à deux composants sur un substrat en utilisant un applicateur à haute efficacité de transfert pour former une couche de revêtement placée sur le substrat, ledit procédé comprenant les étapes de :
fourniture de la composition de revêtement sur l'applicateur à haute efficacité de transfert ; et
application de la composition de revêtement sur le substrat par le biais de l'applicateur à haute efficacité de transfert pour former la couche de revêtement sur le substrat dans lequel une perte de substances volatiles après l'application par le biais de l'applicateur à haute efficacité de transfert est inférieure à environ 0,5 pour cent en poids sur la base d'un poids total de la composition de revêtement,
dans lequel la composition de revêtement comprend :
F. une résine à fonctionnalité hydroxyle ;
G. un agent de réticulation de type isocyanate ;
H. un pigment facultatif ;
I. un solvant organique ; et
J. au moins un agent de contrôle de coulure de type cristaux de polyurée qui est le produit de réaction d'une amine et d'un isocyanate, qui a un point de fusion d'environ 50 °C à environ 150 °C, et qui est présent en une quantité allant d'environ 0,1 à environ 4 pour cent en poids sur la base d'un poids total de la composition de revêtement ; et
dans lequel la composition de revêtement a une épaisseur de film humide d'au moins environ 30 microns mesurée à environ 45 degrés sans coulure visible.
